(19) **Europäisches Patentamt / European Patent Office / Office européen des brevets**

(11) **EP 4 692 615 A1**

(12) **EUROPEAN PATENT APPLICATION**
published in accordance with Art. 153(4) EPC

(43) Date of publication:
**11.02.2026 Bulletin 2026/07**

(21) Application number: **23930936.2**

(22) Date of filing: **19.12.2023**

(51) International Patent Classification (IPC):
**F16K 31/04** *(2006.01)* **H02P 8/14** *(2006.01)*

(52) Cooperative Patent Classification (CPC):
**F16K 31/04; H02P 8/14**

(86) International application number:
**PCT/JP2023/045453**

(87) International publication number:
**WO 2024/202317 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2023 JP 2023048802**

(71) Applicant: **Fujikoki Corporation
Tokyo 158-0082 (JP)**

(72) Inventors:
• **YAMADA Kento**
**Tokyo 158-0082 (JP)**
• **WATANABE Takayuki**
**Tokyo 158-0082 (JP)**

(74) Representative: **Ter Meer Steinmeister & Partner
Patentanwälte mbB
Artur-Ladebeck-Strasse 51
33617 Bielefeld (DE)**

(54) **MOTORIZED VALVE CONTROL DEVICE, MOTORIZED VALVE DEVICE, AND MOTORIZED VALVE CONTROL METHOD**

(57) [Problem] To provide a motor-operated valve control device, a motor-operated valve device including the motor-operated valve control device, and a method for controlling a motor-operated valve that are capable of reducing power consumption of the motor-operated valve.

[Solution] A motor-operated valve control device (70) obtains a voltage generated in a stator (60) by rotation of a rotor (41) and determines a relationship between the rotational load and the magnitude of a driving current supplied to the stator (60), based on the voltage. The motor-operated valve control device (70) maintains the magnitude of the driving current when determining that the magnitude of the driving current is appropriate for the rotational load, decreases the magnitude of the driving current when determining that the magnitude of the driving current is excessive relative to the rotational load, and increases the magnitude of the driving current when determining that the magnitude of the driving current is insufficient relative to the rotational load.

FIG.2

**Description**

Technical Field

The present invention relates to a motor-operated valve control device, a motor-operated valve device including a motor-operated valve control device, and a method for controlling a motor-operated valve.

Background Art

Patent Literature 1 discloses an example of a motor-operated valve according to the related art. The motor-operated valve is installed in a refrigeration cycle system of an air conditioner. The motor-operated valve includes a valve member and a stepping motor for moving the valve member. The stepping motor includes a rotor and a stator. The rotor rotates in response to a pulse input to the stepping motor. Specifically, when a driving current corresponding to the pulse is supplied to a coil of the stator, the rotor rotates. As the rotor rotates, the valve member moves.

Citation List

Patent Literature

Patent Literature 1: WO2019/130928

Summary of Invention

Technical Problem

The rotational load of the rotor varies according to the force applied to the valve member. In order to ensure rotation of the rotor, the magnitude of the driving current supplied to the coil of the stator is determined to match a relatively large rotational load. As a result, when the rotational load is small, the driving current is large relative to the rotational load, causing the stepping motor to consume excess power.

Accordingly, it is an object of the present invention to provide a motor-operated valve control device, a motor-operated valve device including the motor-operated valve control device, and a method for controlling a motor-operated valve that are capable of reducing power consumption of the motor-operated valve.

Solution to Problem

The inventors used multiple motor-operated valves for measuring voltages generated in stators by rotation of the rotors (i.e., voltages induced in the stators due to electromagnetic induction), and intensively studied the measurement results. As a result, the inventors found a difference between the voltage when the magnitude of the driving current is appropriate for the rotational load of the rotor and the voltage when the magnitude of the driving current is not appropriate for the rotational load of the rotor. Based on these findings, the present invention was conceived.

To achieve the object above, a motor-operated valve control device according to an aspect of the present invention is provided for controlling a motor-operated valve including a valve body that has a valve port, a stepping motor that includes a rotor and a stator, and a valve member that moves relative to the valve port when the rotor rotates.

The motor-operated valve control device includes:

a rotation control unit configured to supply a driving current for rotating the rotor to the stator;
an obtaining unit configured to obtain a voltage generated in the stator by rotation of the rotor; and
a determining unit configured to determine a relationship between rotational load of the rotor and magnitude of the driving current, based on the voltage obtained by the obtaining unit.

The rotation control unit is configured to:

decrease the magnitude of the driving current when the determining unit determines that the magnitude of the driving current is excessive relative to the rotational load of the rotor; and
increase the magnitude of the driving current when the determining unit determines that the magnitude of the driving current is insufficient relative to the rotational load of the rotor.

In the present invention, preferably, the rotation control unit is configured to maintain the magnitude of the driving current when the determining unit determines that the magnitude of the driving current is appropriate for the rotational load of the rotor.

In the present invention, preferably, the determining unit is configured to determine the relationship based on a degree of difference between a waveform of the voltage obtained by the obtaining unit and a reference waveform of the voltage.

In the present invention, preferably, the determining unit is configured to calculate a difference-degree score indicating the degree of the difference between the waveform of the voltage and the reference waveform of the voltage, and determine the relationship based on a result of comparing the difference-degree score with a determination threshold.

In the present invention, preferably, the reference waveform of the voltage is represented as a data table including a time point and a reference voltage associated with the time point.

Preferably, the obtaining unit is configured to sequentially obtain voltages each of which is the voltage.

Preferably, the determining unit is configured to:

calculate an intermediate value that is a squared value of a difference value between the voltage obtained by the obtaining unit at an obtaining time and the reference voltage associated with the time point corresponding to the obtaining time in the data table; and

calculate the difference-degree score by summing intermediate values each of which is the intermediate value calculated using the voltage.

To achieve the object above, a motor-operated valve control device according to another aspect of the present invention is provided for controlling a motor-operated valve including a valve body that has a valve port, a stepping motor that includes a rotor and a stator, and a valve member that moves relative to the valve port when the rotor rotates.

The motor-operated valve control device includes:

a rotation control unit configured to supply a driving current for rotating the rotor to the stator;
an obtaining unit configured to obtain a current generated in the stator by rotation of the rotor; and
a determining unit configured to determine a relationship between rotational load of the rotor and magnitude of the driving current, based on the current obtained by the obtaining unit.

The rotation control unit is configured to:

decrease the magnitude of the driving current when the determining unit determines that the magnitude of the driving current is excessive relative to the rotational load of the rotor; and

increase the magnitude of the driving current when the determining unit determines that the magnitude of the driving current is insufficient relative to the rotational load of the rotor.

In the present invention, preferably, the rotation control unit is configured to maintain the magnitude of the driving current when the determining unit determines that the magnitude of the driving current is appropriate for the rotational load of the rotor.

To achieve the object above, a motor-operated valve device according to another aspect of the present invention includes the motor-operated valve control device and the motor-operated valve.

To achieve the object above, a method according to another aspect of the present invention is provided for controlling a motor-operated valve including a valve body that has a valve port, a stepping motor that includes a rotor and a stator, and a valve member that moves relative to the valve port when the rotor rotates.

The method includes:

supplying a driving current for rotating the rotor to the stator;
obtaining a voltage generated in the stator by rotation of the rotor;
determining a relationship between rotational load of the rotor and magnitude of the driving current, based on the voltage;
decreasing the magnitude of the driving current when the magnitude of the driving current is determined to be excessive relative to the rotational load of the rotor; and
increasing the magnitude of the driving current when the magnitude of the driving current is determined to be insufficient relative to the rotational load of the rotor.
In the present invention, preferably, the method includes: maintaining the magnitude of the driving current when the magnitude of the driving current is determined to be appropriate for the rotational load of the rotor.

To achieve the object above, a method according to another aspect of the present invention is provided for controlling a motor-operated valve including a valve body that has a valve port, a stepping motor that includes a rotor and a stator, and a valve member that moves relative to the valve port when the rotor rotates.

The method includes:

supplying a driving current for rotating the rotor to the stator;

obtaining a current generated in the stator by rotation of the rotor;

determining a relationship between rotational load of the rotor and magnitude of the driving current, based on the current;

decreasing the magnitude of the driving current when the magnitude of the driving current is determined to be excessive relative to the rotational load of the rotor; and

increasing the magnitude of the driving current when the magnitude of the driving current is determined to be insufficient relative to the rotational load of the rotor.

In the present invention, preferably, the method includes: maintaining the magnitude of the driving current when the magnitude of the driving current is determined to be appropriate for the rotational load of the rotor. Advantageous Effects of Invention

According to one aspect of the present invention, the motor-operated valve control device supplies the driving current for rotating the rotor to the stator. The motor-operated valve control device obtains the voltage generated in the stator by the rotation of the rotor. The motor-operated valve control device determines the relationship between the rotational load of the rotor and the magnitude of the driving current, based on the voltage obtained. The motor-operated valve control device decreases the magnitude of the driving current when determining that the magnitude of the driving current is excessive relative to the rotational load of the rotor, and increases the magnitude of the driving current when determining that the magnitude of the driving current is insufficient relative to the rotational load of the rotor.

According to another aspect of the present invention, the motor-operated valve control device supplies the driving current for rotating the rotor to the stator. The motor-operated valve control device obtains the current generated in the stator by the rotation of the rotor. The motor-operated valve control device determines the relationship between the rotational load of the rotor and the magnitude of the driving current, based on the current obtained. The motor-operated valve control device decreases the magnitude of the driving current when determining that the magnitude of the driving current is excessive relative to the rotational load of the rotor, and increases the magnitude of the driving current when determining that the magnitude of the driving current is insufficient relative to the rotational load of the rotor.

With this configuration, the motor-operated valve control device can supply to the stator the driving current of a magnitude that is appropriate for the rotational load of the rotor, enabling the power consumption of the motor-operated valve to be reduced.

Brief Description of Drawings

[Fig. 1] Fig. 1 is a block diagram of an air conditioner including a motor-operated valve device.

[Fig. 2] Fig. 2 is a sectional view of the motor-operated valve device in Fig. 1.

[Fig. 3] Fig. 3 is a diagram illustrating a valve stem holder of the motor-operated valve device in Fig. 2.

[Fig. 4] Fig. 4 is a side view of a guide bush of the motor-operated valve device in Fig. 2.

[Fig. 5] Fig. 5 is a diagram illustrating a stopper member of the motor-operated valve device in Fig. 2.

[Fig. 6] Fig. 6 is a plan view of the valve stem holder, the stopper member, a rotor, and a stator of the motor-operated valve device in Fig. 2.

[Fig. 7] Fig. 7 is a diagram illustrating a computer, a motor driver including a current circuit with switching elements, and a stepping motor of the motor-operated valve device in Fig. 2.

[Fig. 8] Fig. 8 is a diagram illustrating an example of a correspondence between pulses input to the stepping motor and A-phase and B-phase current target values.

[Fig. 9] Fig. 9 is a diagram illustrating an example of waveforms of A-phase and B-phase currents.

[Fig. 10] Fig. 10 is a diagram schematically illustrating a positional relationship between magnetic poles of the rotor and pole teeth of the stator (when pulse P[1] is input).

[Fig. 11] Fig. 11 is a diagram schematically illustrating the positional relationship between the magnetic poles of the rotor and the pole teeth of the stator (when pulse P[2] is input).

[Fig. 12] Fig. 12 is a diagram schematically illustrating the positional relationship between the magnetic poles of the rotor and the pole teeth of the stator (when pulse P[3] is input).

[Fig. 13] Fig. 13 is a diagram schematically illustrating the positional relationship between the magnetic poles of the rotor and the pole teeth of the stator (when pulse P[4] is input).

[Fig. 14] Fig. 14 is a diagram schematically illustrating the positional relationship between the magnetic poles of the rotor and the pole teeth of the stator (when pulse P[5] is input).

[Fig. 15] Fig. 15 is a diagram schematically illustrating the positional relationship between the magnetic poles of the rotor and the pole teeth of the stator (when pulse P[6] is input).

[Fig. 16] Fig. 16 is a diagram schematically illustrating the positional relationship between the magnetic poles of the rotor and the pole teeth of the stator (when pulse P[7] is input).

[Fig. 17] Fig. 17 is a diagram schematically illustrating the positional relationship between the magnetic poles of the rotor and the pole teeth of the stator (when pulse P[8] is input).

[Fig. 18] Fig. 18 is a diagram illustrating an example of a waveform of a voltage generated in the stator by rotation of the rotor.

[Fig. 19] Fig. 19 is an enlarged view of a part of the diagram in Fig. 18.

[Fig. 20] Fig. 20 is a diagram illustrating an example of a data table representing the waveform of the voltage generated in the stator by the rotation of the rotor.

[Fig. 21] Fig. 21 is a diagram illustrating change in rotational angle of the rotor for each magnitude of driving current.

[Fig. 22] Fig. 22 is a diagram illustrating the waveform of the voltage generated in the stator by the rotation of the rotor for each magnitude of driving current.

[Fig. 23] Fig. 23 is a graph illustrating a relationship between the magnitude of the driving current and a difference-degree score (where the magnitude of the driving current corresponding to a reference waveform of the voltage is 0.30 [A]).

[Fig. 24] Fig. 24 is a graph illustrating the relationship between the magnitude of the driving current and the difference-degree score (where the magnitude of the driving current corresponding to the reference waveform of the voltage is 0.06 [A]).

[Fig. 25] Fig. 25 is a graph illustrating the relationship between the magnitude of the driving current and the difference-degree score (where the magnitude of the driving current corresponding to the reference waveform of the voltage is 0.60 [A]).

[Fig. 26] Fig. 26 is a graph illustrating the relationship between the magnitude of the driving current and the difference-degree score (where the magnitudes of the driving current corresponding to the reference waveform of the voltage are 0.30 [A] and 0.06 [A]).

[Fig. 27] Fig. 27 is a graph illustrating the relationship between the magnitude of the driving current and the difference-degree score (where the magnitudes of the driving current corresponding to the reference waveform of the voltage are 0.06 [A] and 0.60 [A]).

[Fig. 28] Fig. 28 is a graph illustrating a relationship between the magnitude of the rotational load of the rotor and the difference-degree score (Part 1).

[Fig. 29] Fig. 29 is a graph illustrating the relationship between the magnitude of the rotational load of the rotor and the difference-degree score (Part 2).

[Fig. 30] Fig. 30 is a diagram illustrating an example of the waveform of the voltage generated in the stator by the rotation of the rotor and the reference waveform of the voltage.

[Fig. 31] Fig. 31 is a flowchart illustrating an example of an operation of the motor-operated valve control device.

Description of Embodiments

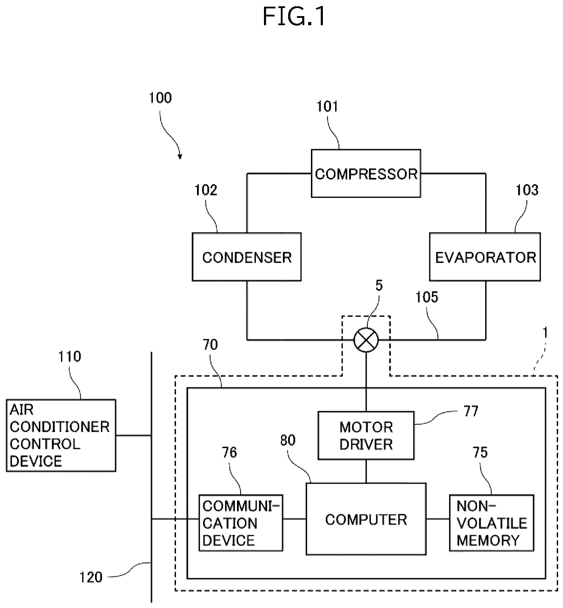

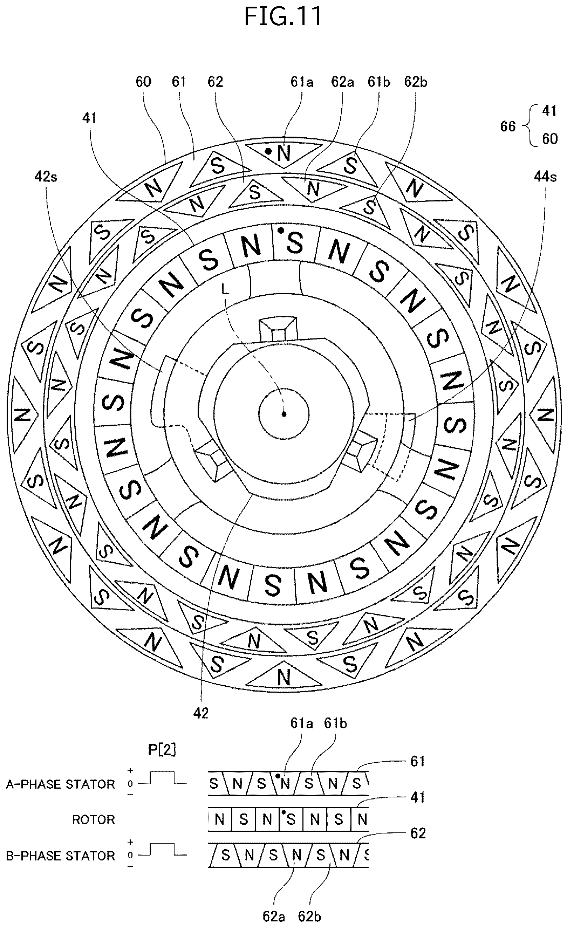

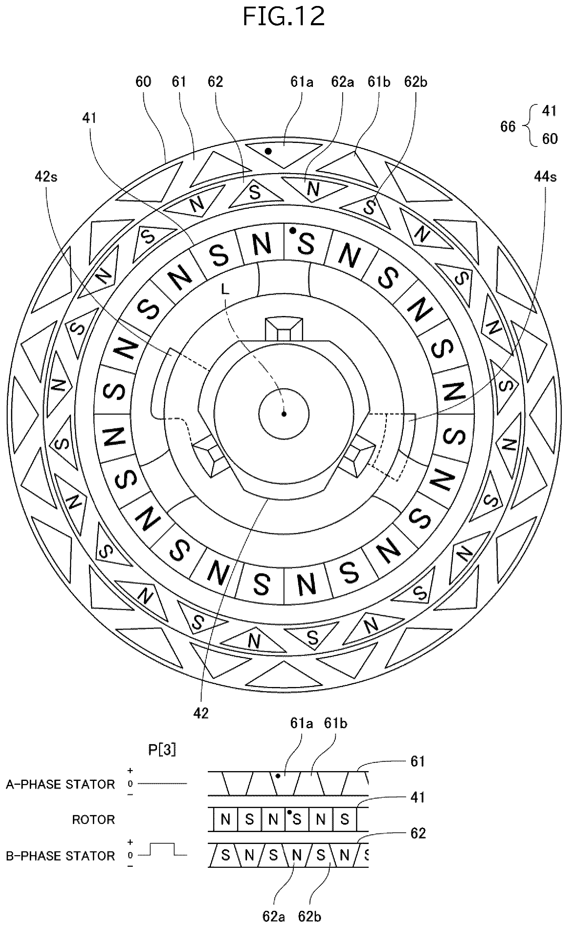

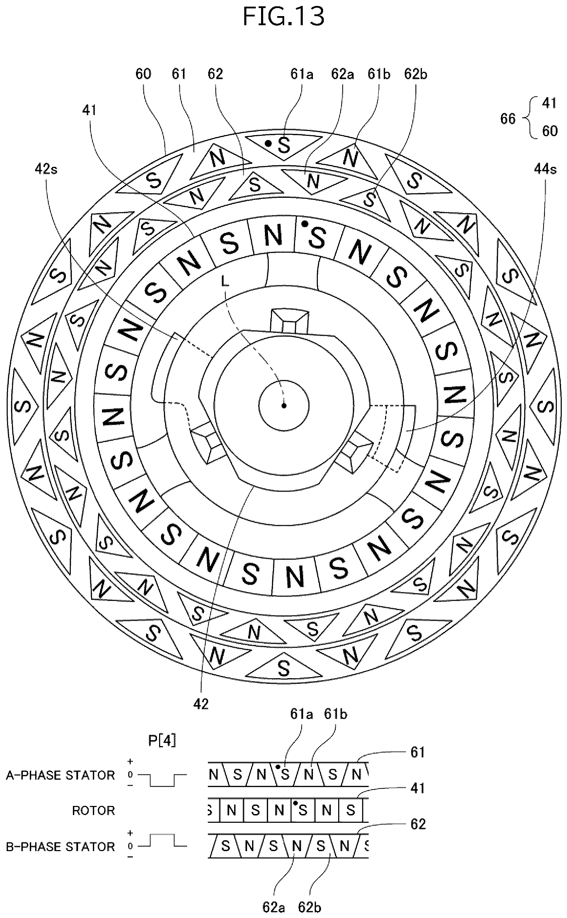

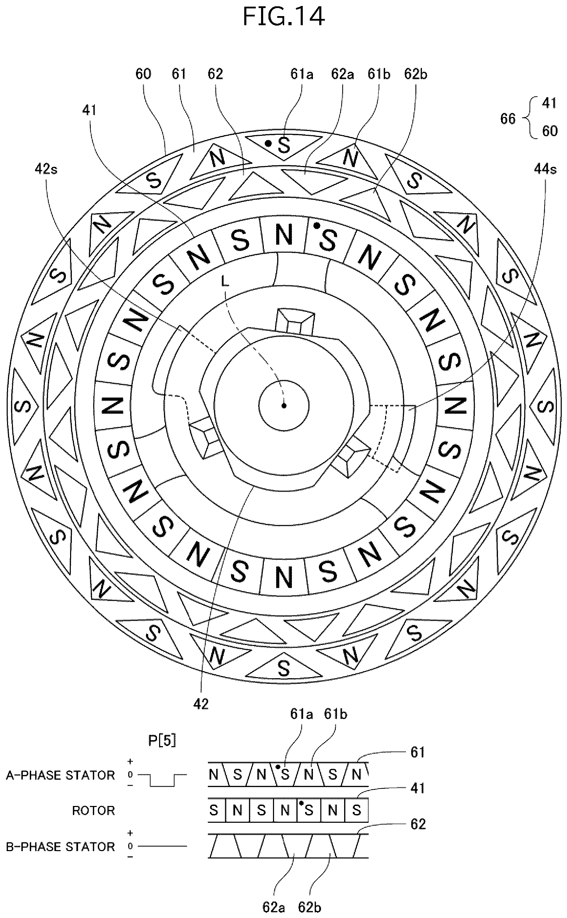

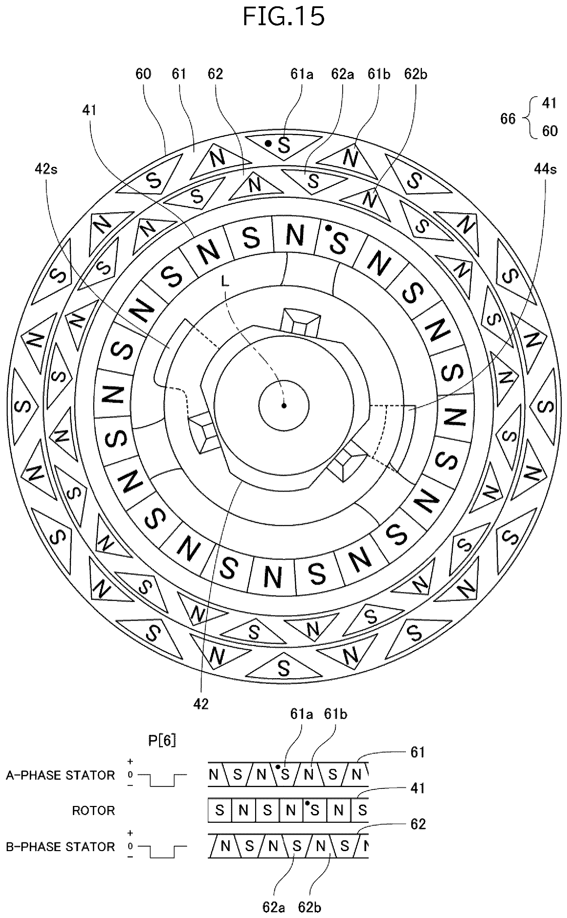

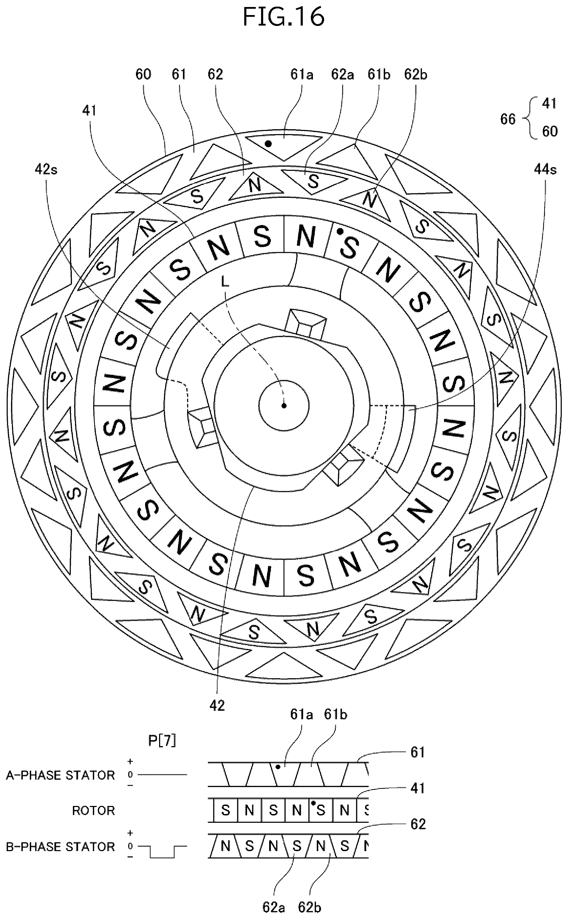

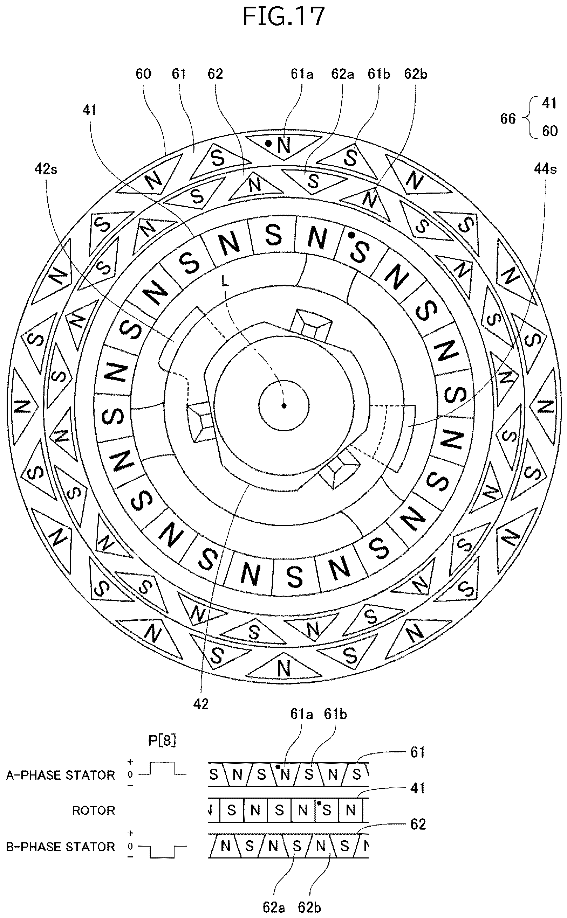

A motor-operated valve device is described below with reference to Figs. 1 to 31.

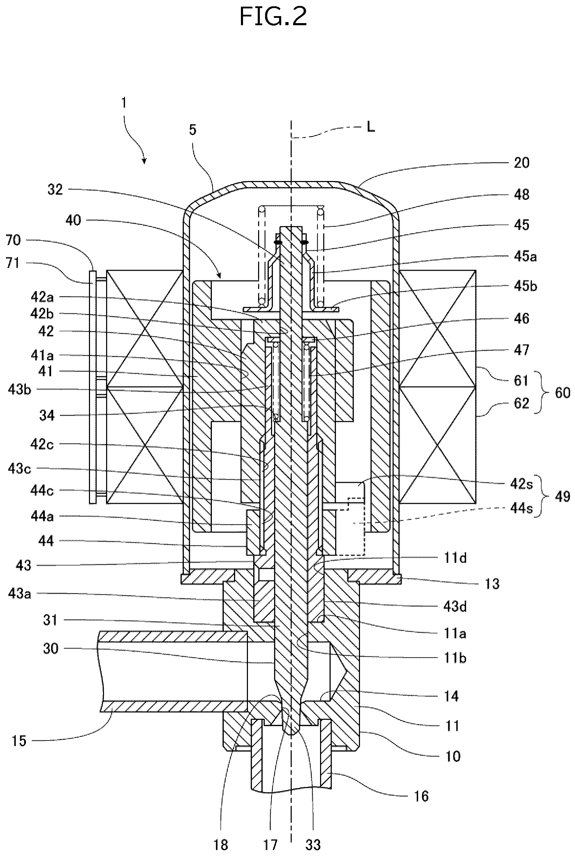

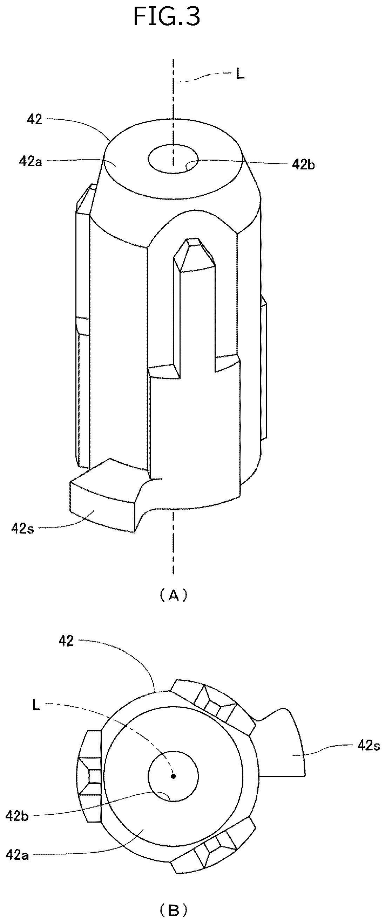

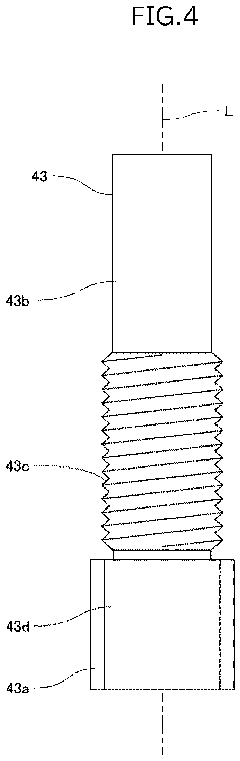

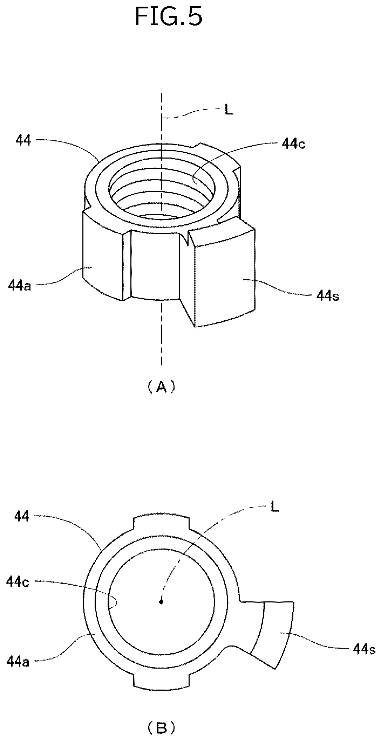

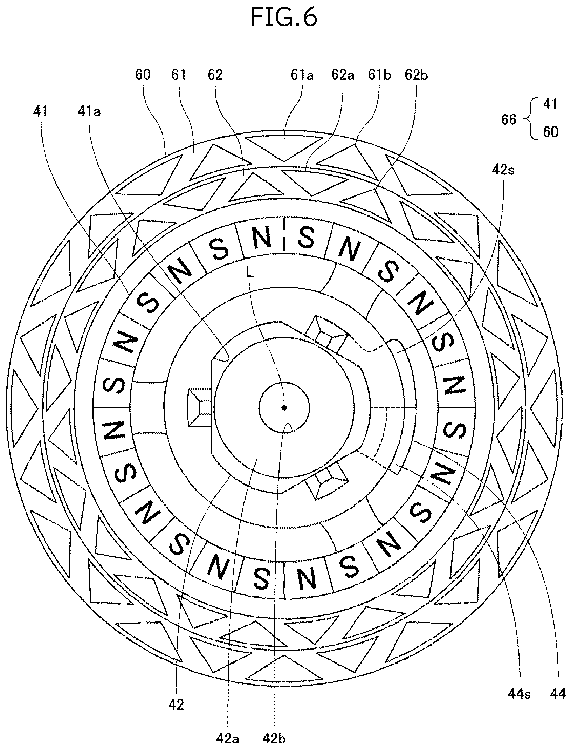

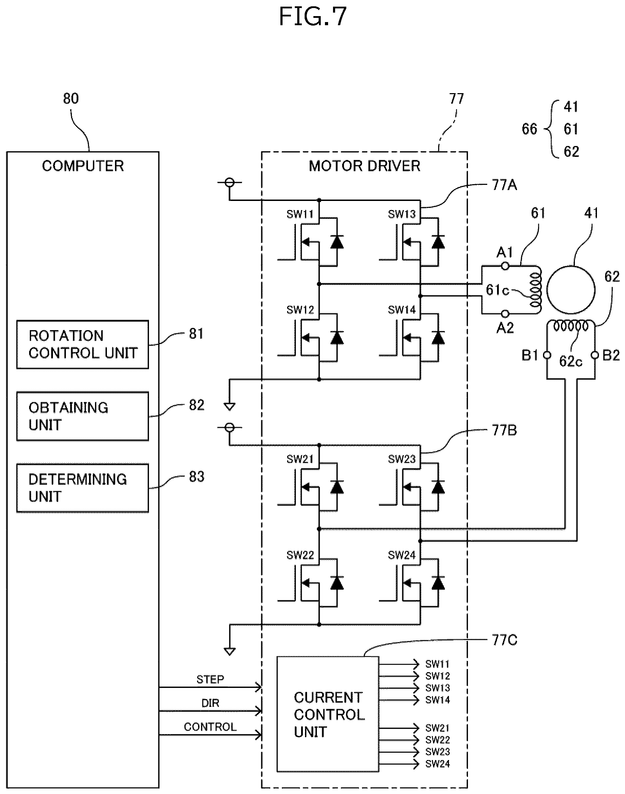

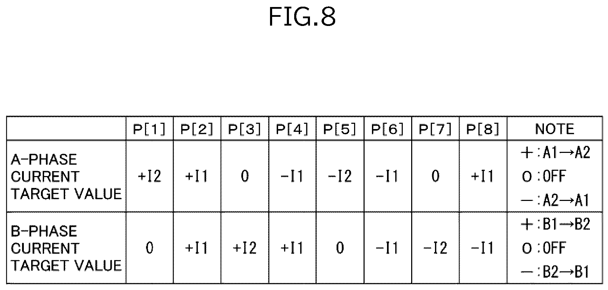

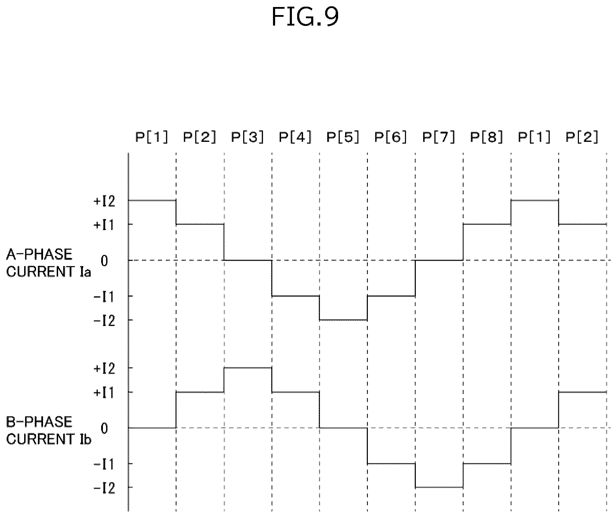

Fig. 1 is a block diagram of an air conditioner including a motor-operated valve device. Fig. 2 is a sectional view of the motor-operated valve device in Fig. 1. Fig. 3 is a diagram illustrating a valve stem holder of the motor-operated valve device in Fig. 2. Fig. 3A is a perspective view of the valve stem holder. Fig. 3B is a plan view of the valve stem holder. Fig. 4 is a side view of a guide bush of the motor-operated valve device in Fig. 2. Fig. 5 is a diagram illustrating a stopper member of the motor-operated valve device in Fig. 2. Fig. 5A is a perspective view of the stopper member. Fig. 5B is a plan view of the stopper member. Fig. 6 is a plan view of the valve stem holder, the stopper member, a rotor, and a stator of the motor-operated valve device in Fig. 2. Fig. 6 schematically illustrates magnetic poles of the rotor and the stator. Fig. 7 is a diagram illustrating a computer, a motor driver including a current circuit with switching elements, and a stepping motor of the motor-operated valve device in Fig. 2. Fig. 8 is a diagram illustrating an example of a correspondence between pulses input to the stepping motor and A-phase and B-phase current target values. Fig. 9 is a diagram illustrating an example of waveforms of A-phase and B-phase currents supplied to the stator.

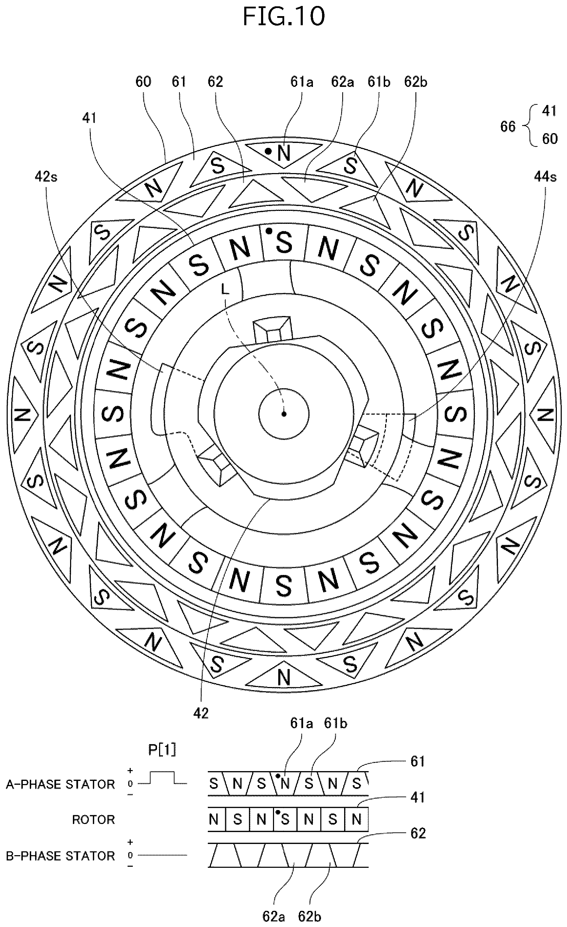

Figs. 10 to 17 are diagrams schematically illustrating the positional relationship between the magnetic poles of the rotor and pole teeth of the stator. Figs. 10 to 17 illustrate states when pulses P[1] to P[8] are input to the stepping motor. Figs. 10 to 17 schematically illustrate the magnetic poles of the rotor and the stator.

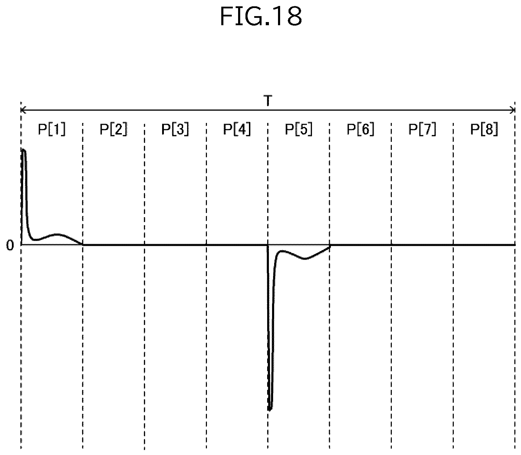

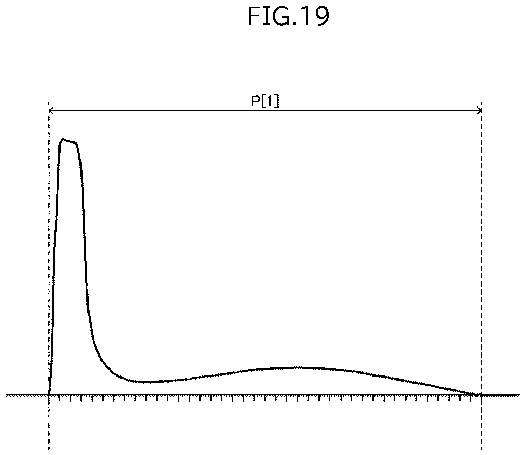

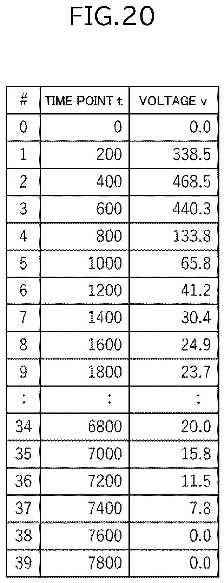

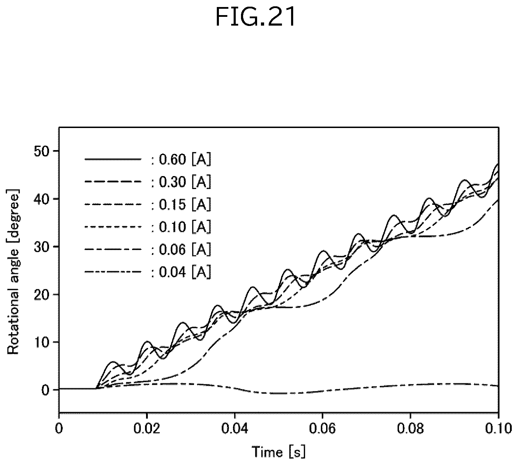

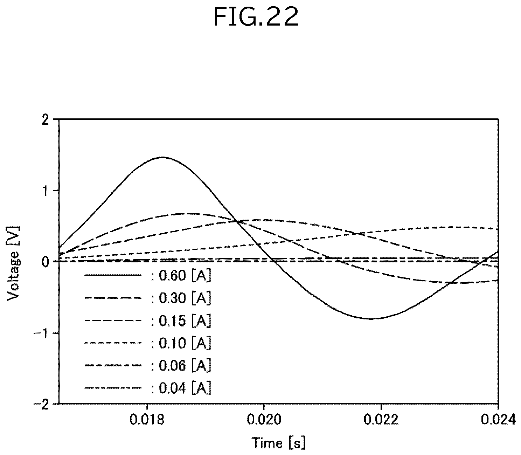

Fig. 18 is a diagram illustrating an example of a waveform of a voltage generated in the stator by rotation of the rotor. Fig. 19 is an enlarged view of a part (a section corresponding to pulse P[1]) of the diagram in Fig. 18. In Figs. 18 and 19, the horizontal axis corresponds to time and the vertical axis corresponds to voltage. Fig. 20 is a diagram illustrating an example of a data table representing the waveform of the voltage generated in the stator by the rotation of the rotor. Fig. 21 is a diagram illustrating change in rotational angle of the rotor for each magnitude of driving current. In Fig. 21, the horizontal axis corresponds to time and the vertical axis corresponds to rotational angle. Fig. 22 is a diagram illustrating the waveform of the voltage generated in the stator by the rotation of the rotor for each magnitude of the driving current. In Fig. 22, the horizontal axis corresponds to time and the vertical axis corresponds to voltage.

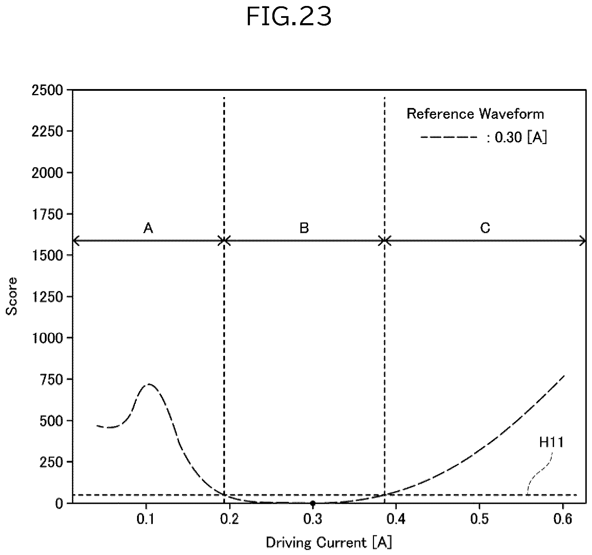

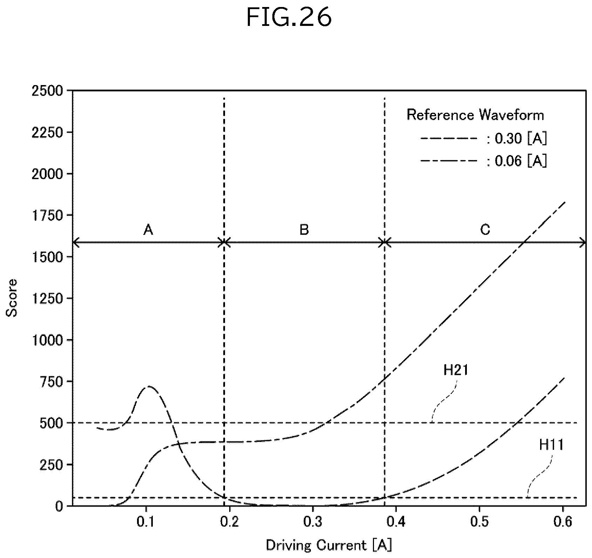

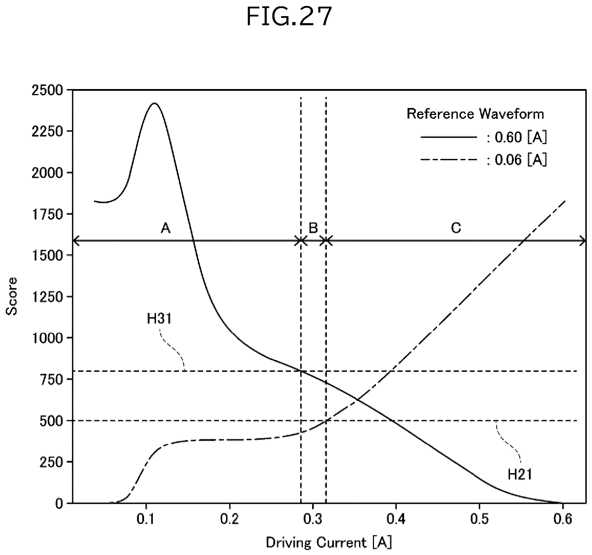

Figs. 23 to 27 are graphs each illustrating a relationship between the magnitude of the driving current supplied to the stator and a difference-degree score. In Figs. 23 to 27, the horizontal axis corresponds to magnitude of the driving current and the vertical axis corresponds to difference-degree score (Score). Figs. 23, 24, and 25 illustrate graphs, where the magnitudes of the driving current corresponding to a reference waveform of the voltage are 0.30 [A], 0.06 [A], and 0.60 [A], respectively. Fig. 26 illustrates a graph where the magnitudes of the driving current corresponding to the reference waveform of the voltage are 0.30 [A] and 0.06 [A]. Fig. 27 illustrates a graph where the magnitudes of the driving current corresponding to the reference waveform of the voltage are 0.06 [A] and 0.60 [A].

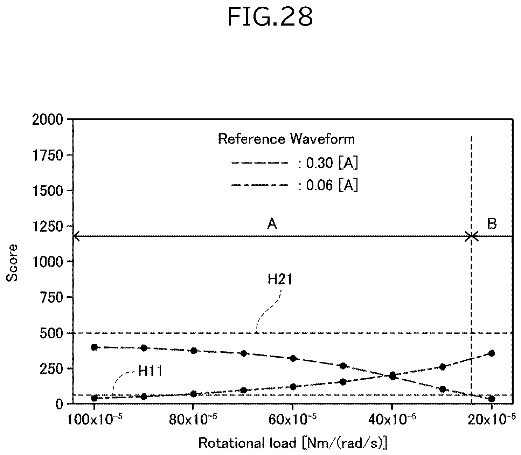

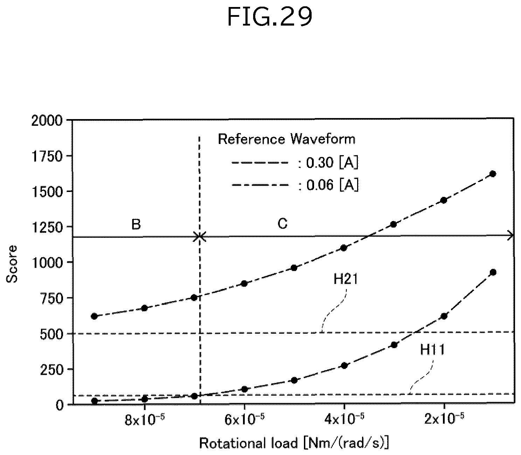

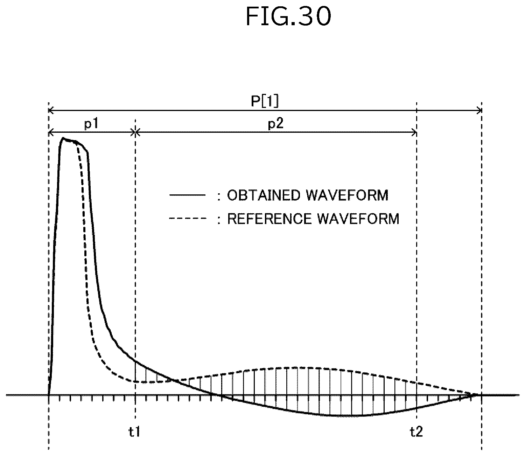

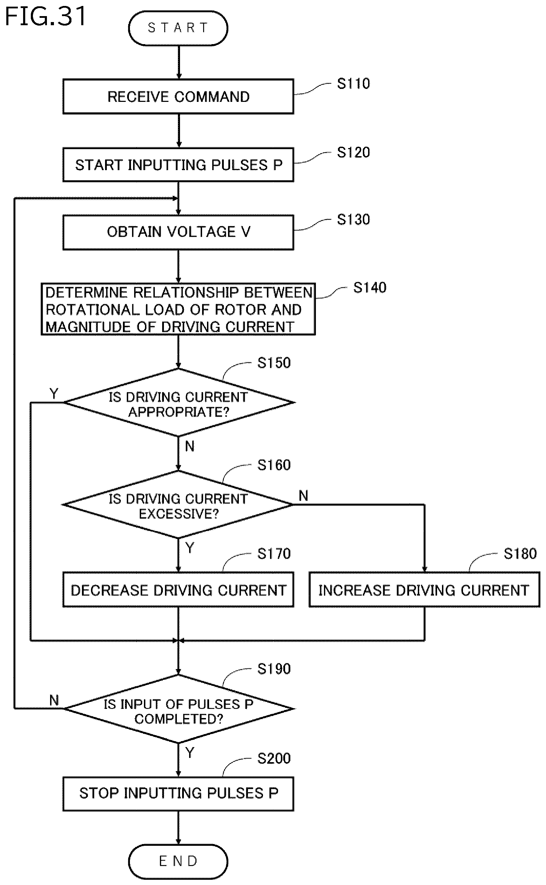

Figs. 28 and 29 are graphs each illustrating a relationship between the magnitude of the rotational load of the rotor and the difference-degree score. Fig. 30 is a diagram illustrating an example of the waveform of the voltage generated in the stator by the rotation of the rotor and the reference waveform of the voltage. In Fig. 30, the horizontal axis corresponds to time and the vertical axis corresponds to voltage. Fig. 31 is a flowchart illustrating an example of an operation of the motor-operated valve control device.

A motor-operated valve device 1 according to the embodiment is used as, for example, a flow control valve for controlling the flow rate of refrigerant as fluid in a refrigeration cycle system of an air conditioner.

Fig. 1 illustrates an example of an air conditioner 100 mounted in a vehicle. The air conditioner 100 includes a compressor 101, a condenser 102, the motor-operated valve device 1 (including a motor-operated valve 5), and an evaporator 103, which are connected in this order by a pipe 105. The motor-operated valve device 1 functions as an expansion valve. The air conditioner 100 includes an air conditioner control device 110. The air conditioner control device 110 is connected to the motor-operated valve device 1 (including a motor-operated valve control device 70) and can communicate with the motor-operated valve device 1. The air conditioner control device 110 uses the motor-operated valve device 1 to control the flow rate of refrigerant flowing through the pipe 105.

As illustrated in Fig. 2, the motor-operated valve device 1 includes the motor-operated valve 5 and the motor-operated valve control device 70.

The motor-operated valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14, a valve port 17, and a valve seat 18. A first conduit 15 and a second conduit 16 are bonded to the body member 11. The first conduit 15 is disposed in a direction (a lateral direction in Fig. 2) perpendicular to an axis L and is connected to the valve chamber 14. The second conduit 16 is disposed in a direction (an up-and-down direction in Fig. 2) of the axis L and is connected to the valve chamber 14 via the valve port 17. The valve port 17 is enclosed by the valve seat 18, which has a circular annular shape, in the valve chamber 14. The body member 11 has a fitting hole 11a, which has a circular shape. The fitting hole 11a is provided in the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has a circular annular plate-like shape. The inner peripheral edge of the connection member 13 is bonded to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, and a plug portion 33. The first stem portion 31 has a circular columnar shape. The second stem portion 32 has a circular columnar shape. The diameter of the second stem portion 32 is smaller than the diameter of the first stem portion 31. The second stem portion 32 is connected to the upper end of the first stem portion 31 and is coaxial with the first stem portion 31. The valve member 30 has a step portion 34, which is a circular annular plane facing upward. The step portion 34 is provided in the part where the second stem portion 32 is connected to the first stem portion 31. The plug portion 33 has a substantially conical shape with a diameter decreasing from top to bottom. The plug portion 33 is connected to the lower end of the first stem portion 31 and is coaxial with the first stem portion 31. The plug portion 33 is disposed in the valve port 17. A variable throttle passage is formed between the plug portion 33 and the valve port 17. The plug portion 33 faces the valve port 17 and the valve seat 18. The valve port 17 is closed when the plug portion 33 is in contact with the valve seat 18. The valve port 17 is open when the plug portion 33 is separated from the valve seat 18.

The driving mechanism 40 moves the valve member 30 in the up-and-down direction (the direction of the axis L).

The movement of the valve member 30 opens and closes the valve port 17. The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable relative to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged one after another at regular angular intervals in the circumferential direction. The rotor 41 has, for example, twelve N poles and twelve S poles. The angle between the N poles and the S poles adjacent to each other is 15 degrees.

Fig. 3 illustrates the valve stem holder 42. The valve stem holder 42 has a circular cylindrical shape. The valve stem holder 42 is open at the lower end. The valve stem holder 42 includes an upper wall portion 42a at the upper end. The upper wall portion 42a has a stem hole 42b. The valve stem holder 42 is fitted into a fitting hole 41a of the rotor 41. The valve stem holder 42 rotates together with the rotor 41. A movable stopper 42s is provided at the lower end of the outer circumferential surface of the valve stem holder 42. The movable stopper 42s is a protrusion extending radially outward. The second stem portion 32 of the valve member 30 is disposed in the stem hole 42b and is movable in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring and pushes the valve member 30 toward the valve seat 18. An internal thread 42c is provided on the inner circumferential surface of the valve stem holder 42. The movable stopper 42s is secured relative to the rotor 41.

Fig. 4 illustrates the guide bush 43. The guide bush 43 includes a base portion 43a and a support portion 43b. The base portion 43a has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with the central axis of the body member 11 on the axis L and allows the guide bush 43 to be properly positioned relative to the body member 11 about the axis L. The support portion 43b has a circular cylindrical shape. The outer diameter of the support portion 43b is smaller than the outer diameter of the base portion 43a. The inner diameter of the support portion 43b is equal to the inner diameter of the base portion 43a. The support portion 43b is connected to the upper end of the base portion 43a and is coaxial with the base portion 43a. An external thread 43c is provided on the outer circumferential surface of the support portion 43b. The external thread 43c is screwed into the internal thread 42c of the valve stem holder 42. The first stem portion 31 of the valve member 30 is disposed inside the guide bush 43. The guide bush 43 supports the valve member 30 so that the valve member 30 is movable in the direction of the axis L.

Fig. 5 illustrates the stopper member 44. The stopper member 44 includes a stopper body 44a. The stopper body 44a has a circular cylindrical shape. An internal thread 44c is provided on the inner circumferential surface of the stopper body 44a. A fixed stopper 44s is provided on the outer circumferential surface of the stopper body 44a. The fixed stopper 44s is a protrusion extending radially outward. The internal thread 44c is engaged with the external thread 43c until the stopper body 44a comes into contact with the base portion 43a of the guide bush 43. As a result, the stopper member 44 is fixed to the guide bush 43. The fixed stopper 44s is secured relative to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is connected to the lower end of the fixed portion 45a. A return spring 48 is disposed such that the return spring 48 encloses the fixed member 45. The return spring 48 is a coil spring.

The motor-operated valve 5 includes the driving mechanism 40 that uses the rotation of the rotor 41 without speed reduction. The motor-operated valve 5 may include, instead of the driving mechanism 40, a driving mechanism that has a speed reduction mechanism reducing the rotational speed of the rotor 41.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tips of the pole teeth 61a point downward, while the tips of the pole teeth 61b point upward. The pole teeth 61a and the pole teeth 61b are alternately arranged one after another at regular angular intervals in the circumferential direction. The A-phase stator 61 has, for example, twelve pole teeth 61a and twelve pole teeth 61b. The angle between the pole teeth 61a and the pole teeth 61b adjacent to each other is 15 degrees. The A-phase stator 61 includes an A-phase coil 61c. When the A-phase coil 61c is energized, the pole teeth 61a and the pole teeth 61b have opposite polarities.

The B-phase stator 62 includes a plurality of claw-pole type pole teeth 62a and 62b in the inner circumference. The tips of the pole teeth 62a point downward, while the tips of the pole teeth 62b point upward. The pole teeth 62a and the pole teeth 62b are alternately arranged one after another at regular angular intervals in the circumferential direction. The B-phase stator 62 has, for example, twelve pole teeth 62a and twelve pole teeth 62b. The angle between the pole teeth 62a and the pole teeth 62b adjacent to each other is 15 degrees. The B-phase stator 62 includes a B-phase coil 62c. When the B-phase coil 62c is energized, the pole teeth 62a and the pole teeth 62b have opposite polarities.

The A-phase stator 61 is disposed coaxially with the B-phase stator 62. The A-phase stator 61 is in contact with the B-phase stator 62. When viewed in the direction of the axis L, the angle between one of the pole teeth 61a of the A-phase stator 61 and one of the pole teeth 62a of the B-phase stator 62 adjacent to each other is 7.5 degrees. In other words, the B-phase stator 62 is located at a position where the B-phase stator 62 is rotated relatively to the A-phase stator 61 about the axis L by 7.5 degrees from the position where the pole teeth 61a and the pole teeth 62a are arranged in the direction of the axis L.

The can 20 is disposed inside the stator 60. The rotor 41 is disposed inside the can 20. The stator 60 and the rotor 41 are members of a stepping motor 66.

The stepping motor 66 is connected to the motor-operated valve control device 70. Specifically, as illustrated in Fig. 7, terminals A1 and A2 of the A-phase coil 61c and terminals B1 and B2 of the B-phase coil 62c are connected to a motor driver 77 of the motor-operated valve control device 70.

The rotor 41 is rotated by pulses P (P[1] to P[8]) input to the stepping motor 66. Specifically, the rotor 41 is rotated by driving currents, corresponding to the pulses P, supplied to the stator 60 of the stepping motor 66. In this specification, "inputting the pulses P to the stepping motor 66" is synonymous with "supplying the driving currents corresponding to the pulses P to the stator 60 of the stepping motor 66".

Pulses P[1] to P[8] are input to the stepping motor 66 in sequence. An A-phase current Ia that is the driving current corresponding to the pulses P is supplied to the A-phase stator 61. A B-phase current Ib that is the driving current corresponding to the pulses P is supplied to the B-phase stator 62. A combination of the A-phase current Ia and B-phase current Ib differs for each pulse P. There are eight combinations, and this number is referred to as the number of patterns of the pulses P. "Pattern" is also referred to as "switching mode". The index numbers (1 to 8) of pulses P[1] to P[8] are pattern numbers for specifying pulses P[1] to P[8]. For example, the period of the pulse P is 8 milliseconds, and a single time period T consisting of pulses P[1] to P[8] is 64 milliseconds. The excitation mode of the stepping motor 66 is 1-2-phase excitation. The step angle of the stepping motor 66 is 3.75 degrees.

For the A-phase current Ia, an A-phase current target value Ita is set for each of pulses P[1] to P[8]. For the B-phase current Ib, a B-phase current target value Itb is set for each of pulses P[1] to P[8]. Fig. 8 illustrates an example of a correspondence between the pulses P and the A-phase current target values Ita and the B-phase current target values Itb.

"+I2" is set for pulse P[1] as the A-phase current target value Ita, and "0" is set for pulse P[1] as the B-phase current target value Itb.

"+I1" is set for pulse P[2] as the A-phase current target value Ita, and "+I1" is set for pulse P[2] as the B-phase current target value Itb.

"0" is set for pulse P[3] as the A-phase current target value Ita, and "+I2" is set for pulse P[3] as the B-phase current target value Itb.

"-I1" is set for pulse P[4] as the A-phase current target value Ita, and "+I1" is set for pulse P[4] as the B-phase current target value Itb.

"-I2" is set for pulse P[5] as the A-phase current target value Ita, and "0" is set for pulse P[5] as the B-phase current target value Itb.

"-I1" is set for pulse P[6] as the A-phase current target value Ita, and "-I1" is set for pulse P[6] as the B-phase current target value Itb.

"0" is set for pulse P[7] as the A-phase current target value Ita, and "-I2" is set for pulse P[7] as the B-phase current target value Itb.

"+I1" is set for pulse P[8] as the A-phase current target value Ita, and "-I1" is set for pulse P[8] as the B-phase current target value Itb.

Currents indicated as "+I2" and "-I2" have the same magnitude and flow in opposite directions.

Currents indicated as "+I1" and "-I1" have the same magnitude and flow in opposite directions.

Currents indicated as "+I2" and "+I1" have different magnitudes and flow in the same direction.

Fig. 9 schematically illustrates waveforms of the A-phase current Ia and the B-phase current Ib when the pulses P are input to the stepping motor 66 in ascending order. In Fig. 9, the A-phase current Ia has the same magnitude and flows in the same direction as the A-phase current target value Ita, and the B-phase current Ib has the same magnitude and flows in the same direction as the B-phase current target value Itb. In Figs. 8 and 9, the sign (+/-) indicates the direction in which the current flows. "+" indicates the direction from the terminal A1 to the terminal A2 or from the terminal B1 to the terminal B2. "-" indicates the direction from the terminal A2 to the terminal A1 or from the terminal B2 to the terminal B1. "0" indicates that no current flows.

When pulse P[1] or P[5] is input to the stepping motor 66, the A-phase current Ia is supplied to the A-phase stator 61, while the B-phase current Ib is not supplied to the B-phase stator 62.

When pulse P[3] or P[7] is input to the stepping motor 66, the A-phase current Ia is not supplied to the A-phase stator 61, while the B-phase current Ib is supplied to the B-phase stator 62.

When pulse P[2], P[4], P[6], or P[8] is input to the stepping motor 66, the A-phase current Ia is supplied to the A-phase stator 61 and the B-phase current Ib is supplied to the B-phase stator 62.

Figs. 10 to 17 respectively illustrate examples of the positional relationship between the rotor 41 and the stator 60 when pulses P[1] to P[8] are input. In Figs. 10 to 17, the reference pole tooth 61a and the reference magnetic pole (S pole) of the rotor 41 are marked with a dot to facilitate recognition of the positional relationship between the rotor 41 and the stator 60 (the A-phase stator 61 and the B-phase stator 62).

In rotating the rotor 41 in a first direction (clockwise in Figs. 10 to 17), the pulses P are cyclically input to the stepping motor 66 in ascending order (in the order from pulse P[1] to pulse P[8]). When the rotor 41 rotates in the first direction, the screw-feed action of the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the plug portion 33 comes into contact with the valve seat 18. At this time, the rotor 41 is at a valve closing position Rc. When the rotor 41 at this position further rotates in the first direction, the valve closing spring 47 is compressed and the rotor 41 further moves downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s constitute a stopper mechanism 49 restricting the rotation of the rotor 41 in the first direction.

In rotating the rotor 41 in a second direction (counterclockwise in Figs. 10 to 17) opposite to the first direction, the pulses P are cyclically input to the stepping motor 66 in descending order (in the order from pulse P[8] to pulse P[1]). When the rotor 41 rotates in the second direction, the screw-feed action of the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. A valve opening position Ro is defined as the position of the rotor 41 when the fluid flow rate at the valve port 17 (i.e., the opening degree of the valve port 17) is at a predetermined value in a predetermined flow-rate measuring environment. The predetermined value is appropriately set according to the configuration, the application, or similar factors of the motor-operated valve device 1. When the rotor 41 rotates in the second direction and reaches a full-open position Rz, the valve member 30 is positioned farthest from the valve port 17, and the opening degree of the valve port 17 reaches its maximum.

The number of the pulses P required to rotate the rotor 41 from the full-open position Rz to the reference position Rx is referred to as a stroke number Ns. In other words, when the rotor 41 is at the full-open position Rz in the motor-operated valve 5 and then Ns pulses P are input to the stepping motor 66, the rotor 41 is positioned at the reference position Rx. For example, the stroke number Ns is 500. The number of the pulses P required to rotate the rotor 41 from the reference position Rx to the full-open position Rz is also the stroke number Ns.

An initialization number Ni is set based on the stroke number Ns. The initialization number Ni is a sufficient number of the pulses P for rotating the rotor 41 from the full-open position Rz to the reference position Rx. In other words, when the rotor 41 is at any position and Ni pulses P are input to the stepping motor 66, the rotor 41 is positioned at the reference position Rx. For example, the initialization number Ni ranges from 1.05 to 1.3 times the stroke number Ns. The initialization number Ni is used in an initialization operation for positioning the rotor 41 at the reference position Rx.

In the motor-operated valve 5, the respective central axes of the valve port 17, the valve seat 18, the can 20, the valve member 30, the rotor 41, the valve stem holder 42, the guide bush 43, and the stator 60 (the A-phase stator 61 and the B-phase stator 62) are aligned with the axis L.

The motor-operated valve control device 70 includes a circuit board 71 on which electronic components (not illustrated) are mounted. As illustrated in Fig. 1, the motor-operated valve control device 70 includes a non-volatile memory 75, a communication device 76, the motor driver 77, and a computer 80. The motor-operated valve control device 70 controls the motor-operated valve 5 according to a command from the air conditioner control device 110.

The non-volatile memory 75 stores data required to be held even when power is turned off. The non-volatile memory 75 is, for example, EEPROM or flash memory.

The communication device 76 is connected to the air conditioner control device 110 via a wired communication bus 120 and can communicate with the air conditioner control device 110. The air conditioner 100 utilizes a communication system such as Local Interconnect Network (LIN) or Controller Area Network (CAN). The communication device 76 may be wirelessly connected to the air conditioner control device 110 and may wirelessly communicate with the air conditioner control device 110.

The motor driver 77 is controlled by the computer 80 and supplies the driving currents (the A-phase current Ia and the B-phase current Ib) to the stator 60 of the stepping motor 66.

The motor driver 77 is connected to the stator 60 (in Fig. 7). The motor driver 77 supplies the A-phase current Ia to the A-phase coil 61c and supplies the B-phase current Ib to the B-phase coil 62c.

A step signal (STEP) in pulse form and a direction signal (DIR) are input to the motor driver 77 from the computer 80. Inputting the step signal to the motor driver 77 while the direction signal indicating the first direction is being input to the motor driver 77 corresponds to inputting the pulses P to the stepping motor 66 in ascending order. Inputting the step signal to the motor driver 77 while the direction signal indicating the second direction is being input to the motor driver 77 corresponds to inputting the pulses P to the stepping motor 66 in descending order.

A current control signal (CONTROL) is also input to the motor driver 77 from the computer 80. The current control signal is used to set the A-phase current target value Ita and the B-phase current target value Itb for the motor driver 77.

As illustrated in Fig. 7, the motor driver 77 includes H-bridge circuits 77A and 77B, and a current control unit 77C. The H-bridge circuits 77A and 77B are current circuits. The motor driver 77 drives the stepping motor 66 using a bipolar driving method.

The H-bridge circuit 77A is connected to the A-phase coil 61c. The H-bridge circuit 77A includes switches SW11, SW12, SW13, and SW14 as switching elements. The H-bridge circuit 77B is connected to the B-phase coil 62c. The H-bridge circuit 77B includes switches SW21, SW22, SW23, and SW24 as switching elements. The switches SW11, SW12, SW13, SW14, SW21, SW22, SW23, and SW24 may be, for example, either N-channel MOSFETs or P-channel MOSFETs, or a mixture of both.

The switches SW11, SW12, SW13, SW14, SW21, SW22, SW23, and SW24 are controlled to be turned on (the conductive state) or turned off (the non-conductive state).

The current control unit 77C controls the H-bridge circuits 77A and 77B using a pulse width modulation (PWM) control method according to the step and direction signals from the computer 80.

When the A-phase current Ia flowing through the A-phase coil 61c from the terminal A1 to the terminal A2 is supplied:

(1) the current control unit 77C turns off the switches SW12 and SW13, and
(2) the current control unit 77C controls the on-time (i.e., the duty cycle) of the switches SW11 and SW14 such that the magnitude of the A-phase current Ia matches the magnitude of the A-phase current target value Ita.

When the A-phase current Ia flowing through the A-phase coil 61c from the terminal A2 to the terminal A1 is supplied:

(1) the current control unit 77C turns off the switches SW11 and SW14, and
(2) the current control unit 77C controls the on-time of the switches SW12 and SW13 such that the magnitude of the A-phase current Ia matches the magnitude of the A-phase current target value Ita.

When the B-phase current Ib flowing through the B-phase coil 62c from the terminal B1 to the terminal B2 is supplied:

(1) the current control unit 77C turns off the switches SW22 and SW23, and
(2) the current control unit 77C controls the on-time of the switches SW21 and SW24 such that the magnitude of the B-phase current Ib matches the magnitude of the B-phase current target value Itb.

When the B-phase current Ib flowing through the B-phase coil 62c from the terminal B2 to the terminal B1 is supplied:

(1) the current control unit 77C turns off the switches SW21 and SW24, and
(2) the current control unit 77C controls the on-time of the switches SW22 and SW23 such that the magnitude of the B-phase current Ib matches the magnitude of the B-phase current target value Itb.

The current control unit 77C may control the H-bridge circuits 77A and 77B using a method other than the pulse width modulation control method.

The computer 80 is a microcomputer for embedded devices and incorporates a CPU, ROM, RAM, an input/output interface, an analog-to-digital converter, and similar components in a single package. The computer 80 may incorporate the non-volatile memory 75, the communication device 76, and the motor driver 77. The computer 80 functions as a rotation control unit 81, an obtaining unit 82, and a determining unit 83 by the CPU executing a program stored in the ROM.

The rotation control unit 81 inputs the pulses P to the stepping motor 66 to rotate the rotor 41 in the first direction or the second direction. Specifically, the rotation control unit 81 controls the motor driver 77 according to the command from the air conditioner control device 110 to supply the A-phase current Ia and the B-phase current Ib to the stator 60 (the A-phase coil 61c and the B-phase coil 62c). The rotation control unit 81 inputs the step, direction, and current control signals to the motor driver 77.

The obtaining unit 82 obtains a voltage generated in the stator 60 by the rotation of the rotor 41, that is, a voltage induced in the stator 60 due to electromagnetic induction.

Specifically, the obtaining unit 82 sequentially obtains voltages VB that are generated between the terminals B1 and B2 of the B-phase coil 62c when the driving current is supplied only to the A-phase coil 61c by the rotation control unit 81 in response to pulses P[1] and P[5]. The obtaining unit 82 sequentially obtains voltages VA that are generated between the terminals A1 and A2 of the A-phase coil 61c when the driving current is supplied only to the B-phase coil 62c by the rotation control unit 81 in response to pulses P[3] and P[7]. The obtaining unit 82 does not obtain any voltage VA or voltage VB when the driving currents are supplied to both the A-phase coil 61c and the B-phase coil 62c by the rotation control unit 81 in response to pulses P[2], P[4], P[6], and P[8]. In the following description, the voltages VA and VB obtained by the obtaining unit 82 are simply referred to as "voltage V".

The obtaining unit 82 may sequentially obtain the voltages V when the driving currents are supplied by the rotation control unit 81 to the A-phase coil 61c and the B-phase coil 62c in response to pulses P[1] to P[8]. In this configuration, the obtaining unit 82 separates a voltage component due to electromagnetic induction from the voltage generated between the terminals A1 and A2 and defines the voltage component as the voltage VA. The obtaining unit 82 separates a voltage component due to electromagnetic induction from the voltage generated between the terminals B1 and B2 and defines the voltage component as the voltage VB.

The voltages V sequentially obtained represent a waveform of the voltage V. In this specification, "waveform" refers to the variation in a physical quantity (voltage) over time at a fixed point. "Waveform" is visualized on a coordinate plane, with the vertical axis representing physical quantity and the horizontal axis representing time. The word "waveform" can also refer to non-visual representations, such as a data table that has physical quantity data associated with time data and is stored in the RAM of the computer 80 or the non-volatile memory 75. Additionally, "area of the waveform" refers to the area of the region enclosed by the waveform and the horizontal axis when the waveform is represented on the coordinate plane, where the vertical axis represents physical quantity and the horizontal axis both represents time and corresponds to the physical quantity of zero.

Fig. 18 illustrates an example of a waveform of the voltage VB when the rotor 41 rotates in the first direction. The waveform in Fig. 18 includes sections of the waveform of the voltage VB corresponding to pulses P[1] and P[5]. Fig. 19 illustrates an example of the waveform of the voltage VB corresponding to pulse P[1].

The obtaining unit 82 sequentially obtains the voltages V during a time period from the starting point to the ending point of the pulse P at predetermined sampling intervals. For example, the duration from the starting point to the ending point of the pulse P is 8 milliseconds, and the sampling interval is 200 microseconds. For example, the obtaining unit 82 obtains the voltage V 40 times in response to a single pulse P being input.

The voltage V obtained by the obtaining unit 82 may be stored in the RAM as a data table. Fig. 20 illustrates an example of the data table. In the data table, time points t, defined at predetermined intervals from the starting point (time point 0) of the pulse P, are each associated with a voltage v, which represents the voltage V at the corresponding time point t. The intervals between the time points t are equal to the sampling interval (200 microseconds). In Fig. 20, the unit of the time point t is a microsecond. The unit of the voltage v is a millivolt. The units of the time point t and the voltage v may be proprietary units, such as units corresponding to the sampling interval and the resolution of the analog-to-digital converter of the motor-operated valve control device 70.

The determining unit 83 determines a relationship between the rotational load of the rotor 41 and the magnitude of the driving current supplied to the stator 60. Specifically, the determining unit 83 determines whether the magnitude of the driving current is appropriate for the rotational load.

In relation to the operation of the determining unit 83, the inventors conducted the following Experiments 1 to 3.

(Experiment 1)

The inventors used the motor-operated valve 5, in which a constant rotational load was applied to the rotor 41, and obtained the rotational angle of the rotor 41 and the voltage generated in the stator 60 by the rotation of the rotor 41 when driving currents of different magnitudes were supplied to the stator 60 to rotate the rotor 41. In this experiment, the rotational load of the rotor 41 was defined as a viscous damping coefficient, and the magnitude of this rotational load was $10 \times 10^{-5}$ [Nm/(rad/s)]. The magnitudes of the driving currents were 0.04 [A], 0.06 [A], 0.10 [A], 0.15 [A], 0.30 [A], and 0.60 [A]. Figs. 21 and 22 show the results.

As illustrated in Fig. 21, (1) when the magnitude of the driving current is 0.30 [A], the rotational angle of the rotor 41 increases in a stepwise manner, indicating that the magnitude of the driving current is appropriate for the rotational load of the rotor 41. (2) When the magnitude of the driving current is 0.04 [A], the rotational angle of the rotor 41 does not increase, indicating that the magnitude of the driving current is insufficient relative to the rotational load of the rotor 41. (3) When the magnitude of the driving current is in the range of 0.06 [A] to 0.15 [A], the rotational angle of the rotor 41 increases in a delayed manner compared to case (1) above, indicating that the magnitude of the driving current is insufficient relative to the rotational load of the rotor 41. (4) When the magnitude of the driving current is 0.60 [A], the rotational angle of the rotor 41 increases in an oscillating manner, indicating that the magnitude of the driving current is excessive relative to the rotational load of the rotor 41.

Then, as illustrated in Fig. 22, the waveform of the voltage generated in the stator 60 by the rotation of the rotor 41 differs depending on the magnitude of the driving current.

(Experiment 2)

The inventors used the motor-operated valve 5, in which a constant rotational load was applied to the rotor 41, and obtained the voltage generated in the stator 60 by the rotation of the rotor 41 when driving currents of different magnitudes were supplied to the stator 60. Specifically, in the motor-operated valve 5, the pulses P were input to the stepping motor 66 in sequence. Then, the inventors obtained the waveform of the voltage VB generated in the B-phase stator 62 when the driving current was supplied only to the A-phase stator 61 in response to pulse P[1]. In this experiment, the rotational load of the rotor 41 was defined as the viscous damping coefficient, and the magnitude of this rotational load was $10 \times 10^{-5}$ [Nm/(rad/s)]. The magnitudes of the driving currents varied in increments of 0.01 [A] from 0.04 [A] to 0.60 [A].

The waveform of the voltage VB is stored in a data storage device as the data table described above. The data tables correspond to the driving currents having magnitudes ranging from 0.04 [A] to 0.60 [A].

Then, the inventors used one of the waveforms of the voltage VB corresponding to the driving currents as a reference waveform of the voltage VB, and obtained a degree of difference between the waveforms of the voltage VB and the reference waveform of the voltage VB.

Specifically, the inventors calculated a value (referred to as a difference-degree score sv) indicating the degree of the difference between the waveform of the voltage VB and the reference waveform of the voltage VB. The greater the difference-degree score sv, the greater the degree of the difference between the waveform of the voltage VB and the reference waveform of the voltage VB.

The difference-degree score sv is calculated using the data table of the waveform of the voltage VB and the data table of the reference waveform of the voltage VB.

A method for calculating the difference-degree score sv includes:

(1) calculating a value, referred to as a difference value dv, by subtracting the voltage v associated with the time point t in the data table of the reference waveform of the voltage VB from the voltage v associated with this time point t in the data table of the waveform of the voltage VB,
(2) calculating a value, referred to as an intermediate value dv2, by squaring the difference value dv, and
(3) calculating the difference-degree score sv by summing the intermediate values dv2 calculated for each time point t.

Then, the inventors obtained graphs illustrating the relationship between the magnitude of the driving current and the difference-degree score sv. Figs. 23 to 25 illustrate the graphs.

Fig. 23 illustrates a graph in which the waveform of the voltage VB corresponding to the driving current of 0.30 [A] is used as the reference waveform of the voltage VB. In Fig. 23, when the magnitude of the driving current is 0.30 [A], the difference-degree score sv is 0, and the waveform of the voltage VB matches the reference waveform of the voltage VB. In Fig. 23, as the magnitude of the driving current increases from 0.30 [A], the difference-degree score sv gradually increases, and the difference between the waveform of the voltage VB and the reference waveform of the voltage VB gradually becomes larger. In Fig. 23, as the magnitude of the driving current decreases from 0.30 [A], the difference-degree score sv gradually increases, and the difference between the waveform of the voltage VB and the reference waveform of the voltage VB gradually becomes larger. In Fig. 23, as the magnitude of the driving current decreases from 0.10 [A], the difference-degree score sv gradually decreases, and the difference between the waveform of the voltage VB and the reference waveform of the voltage VB gradually becomes smaller.

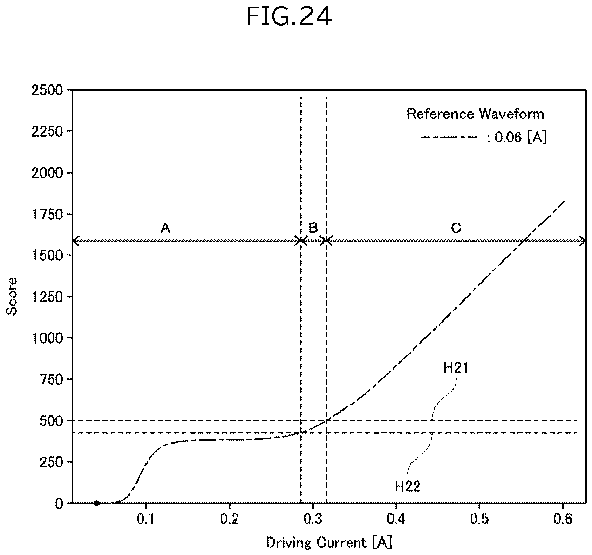

Fig. 24 illustrates a graph in which the waveform of the voltage VB corresponding to the driving current of 0.06 [A] is used as the reference waveform of the voltage VB. In Fig. 24, when the magnitude of the driving current is 0.06 [A], the difference-degree score sv is 0, and the waveform of the voltage VB matches the reference waveform of the voltage VB. In Fig. 24, as the magnitude of the driving current increases from 0.06 [A], the difference-degree score sv gradually increases, and the difference between the waveform of the voltage VB and the reference waveform of the voltage VB gradually becomes larger. The graph illustrated in Fig. 24 increases monotonically.

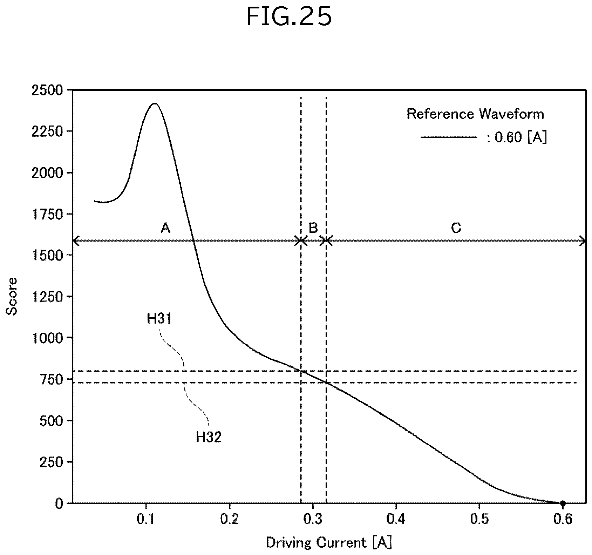

Fig. 25 illustrates a graph in which the waveform of the voltage VB corresponding to the driving current of 0.60 [A] is used as the reference waveform of the voltage VB. In Fig. 25, when the magnitude of the driving current is 0.60 [A], the difference-degree score sv is 0, and the waveform of the voltage VB matches the reference waveform of the voltage VB. In Fig. 25, as the magnitude of the driving current decreases from 0.60 [A], the difference-degree score sv gradually increases, and the difference between the waveform of the voltage VB and the reference waveform of the voltage VB gradually becomes larger. In Fig. 25, as the magnitude of the driving current decreases from 0.10 [A], the difference-degree score sv gradually decreases, and the difference between the waveform of the voltage VB and the reference waveform of the voltage VB gradually becomes smaller.

The results of this experiment indicate that the waveform of the voltage VB changes when the relationship between the rotational load of the rotor 41 and the magnitude of the driving current supplied to the stator 60 changes. Since the voltage VA and the voltage VB are symmetrical, it is estimated that the waveform of the voltage VA also changes in a similar manner when the relationship changes. That is, the relationship is reflected in the voltage V (the voltage VA and the voltage VB) generated in the stator 60 by the rotation of the rotor 41. Accordingly, the relationship can be determined based on the difference-degree score sv corresponding to the voltage. Examples of the determination method are described below.

Determination Method 1 includes:

setting a determination threshold H11 based on the graph in Fig. 23;
using the waveform of the voltage V corresponding to the driving current of 0.30 [A] as the reference waveform of the voltage V;
obtaining the waveform of the voltage V;
calculating the difference-degree score sv using the waveform of the voltage V and the reference waveform of the voltage V;
when the difference-degree score sv is less than or equal to the determination threshold H11 (Section B), determining that the magnitude of the driving current is appropriate for the rotational load of the rotor 41; and
when the difference-degree score sv is greater than the determination threshold H11 (Section A or C), determining that the magnitude of the driving current is not appropriate for the rotational load of the rotor 41.

Determination Method 2 includes:

setting determination thresholds H21 and H22 based on the graph in Fig. 24;
using the waveform of the voltage V corresponding to the driving current of 0.06 [A] as the reference waveform of the voltage V;
obtaining the waveform of the voltage V;
calculating the difference-degree score sv using the waveform of the voltage V and the reference waveform of the voltage V;
when the difference-degree score sv is less than or equal to the determination threshold H21 and is greater than or equal to the determination threshold H22 (Section B), determining that the magnitude of the driving current is appropriate for the rotational load of the rotor 41;
when the difference-degree score sv is greater than the determination threshold H21 (Section C), determining that the magnitude of the driving current is excessive relative to the rotational load of the rotor 41; and
when the difference-degree score sv is less than the determination threshold H22 (Section A), determining that the magnitude of the driving current is insufficient relative to the rotational load of the rotor 41.

Determination Method 3 includes:

setting determination thresholds H31 and H32 based on the graph in Fig. 25;
using the waveform of the voltage V corresponding to the driving current of 0.60 [A] as the reference waveform of the voltage V;
obtaining the waveform of the voltage V;
calculating the difference-degree score sv using the waveform of the voltage V and the reference waveform of the voltage V;
when the difference-degree score sv is less than or equal to the determination threshold H31 and is greater than or equal to the determination threshold H32 (Section B), determining that the magnitude of the driving current is appropriate for the rotational load of the rotor 41;
when the difference-degree score sv is greater than the determination threshold H31 (Section A), determining that the magnitude of the driving current is insufficient relative to the rotational load of the rotor 41; and
when the difference-degree score sv is less than the determination threshold H32 (Section C), determining that the magnitude of the driving current is excessive relative to the rotational load of the rotor 41.

Determination Method 4 includes:

setting the determination thresholds H11 and H21 by combining the graph in Fig. 23 and the graph in Fig. 24, as illustrated in Fig. 26;
using the waveform of the voltage V corresponding to the driving current of 0.30 [A] as a reference waveform (referred to as a reference waveform 1) of the voltage V;
using the waveform of the voltage V corresponding to the driving current of 0.06 [A] as a reference waveform (referred to as a reference waveform 2) of the voltage V;

obtaining the waveform of the voltage V;

calculating a difference-degree score sv1 using the waveform of the voltage V and the reference waveform 1;

calculating a difference-degree score sv2 using the waveform of the voltage V and the reference waveform 2;

when the difference-degree score sv1 is less than or equal to the determination threshold H11 (Section B), determining that the magnitude of the driving current is appropriate for the rotational load of the rotor 41;

when the difference-degree score sv1 is greater than the determination threshold H11 and the difference-degree score sv2 is greater than the determination threshold H21 (Section C), determining that the magnitude of the driving current is excessive relative to the rotational load of the rotor 41; and

when the difference-degree score sv1 is greater than the determination threshold H11 and the difference-degree score sv2 is less than or equal to the determination threshold H21 (Section A), determining that the magnitude of the driving current is insufficient relative to the rotational load of the rotor 41.

Determination Method 5 includes:

setting the determination thresholds H21 and H31 by combining the graph in Fig. 24 and the graph in Fig. 25, as illustrated in Fig. 27;

using the waveform of the voltage V corresponding to the driving current of 0.06 [A] as a reference waveform (referred to as a reference waveform 2) of the voltage V;

using the waveform of the voltage V corresponding to the driving current of 0.60 [A] as a reference waveform (referred to as a reference waveform 3) of the voltage V;

obtaining the waveform of the voltage V;

calculating a difference-degree score sv2 using the waveform of the voltage V and the reference waveform 2;

calculating a difference-degree score sv3 using the waveform of the voltage V and the reference waveform 3 of the voltage V;

when the difference-degree score sv2 is less than or equal to the determination threshold H21 and the difference-degree score sv3 is less than or equal to the determination threshold H31 (Section B), determining that the magnitude of the driving current is appropriate for the rotational load of the rotor 41;

when the difference-degree score sv2 is greater than the determination threshold H21 (Section C), determining that the magnitude of the driving current is excessive relative to the rotational load of the rotor 41; and

when the difference-degree score sv3 is greater than the determination threshold H31 (Section A), determining that the magnitude of the driving current is insufficient relative to the rotational load of the rotor 41.

In Determination Methods 1 to 5, the waveforms of the voltage V corresponding to the driving currents of 0.30 [A], 0.06 [A], and 0.60 [A] are used as the reference waveforms of the voltage V. Which waveform of the voltage V, corresponding to which magnitude of the driving current, is to be used as the reference waveform can be appropriately selected depending on the configuration, application, or other factors of the motor-operated valve device 1.

(Experiment 3)

The inventors used the motor-operated valve 5, in which rotational loads of different magnitudes were applied to the rotor 41, and obtained the voltage generated in the stator 60 by the rotation of the rotor 41 when a driving current of a constant magnitude was supplied to the stator 60. Specifically, in the motor-operated valve 5, the pulses P were input to the stepping motor 66 in sequence. Then, the inventors obtained the waveform of the voltage VB generated in the B-phase stator 62 when the driving current was supplied only to the A-phase stator 61 in response to pulse P[1].

In this experiment, the rotational load of the rotor 41 was defined as the viscous damping coefficient. The magnitude of this rotational load was varied in increments of $10 \times 10^{-5}$ [Nm/(rad/s)] from $100 \times 10^{-5}$ [Nm/(rad/s)] to $10 \times 10^{-5}$ [Nm/(rad/s)], and then in increments of $1 \times 10^{-5}$ [Nm/(rad/s)] from $10 \times 10^{-5}$ [Nm/(rad/s)] to $1 \times 10^{-5}$ [Nm/(rad/s)]. The magnitude of the driving current was 0.30 [A].

The waveforms of the voltage VB are stored in the data storage device as the data tables described above. The data tables correspond to the rotational loads having magnitudes ranging from $100 \times 10^{-5}$ [Nm/(rad/s)] to $1 \times 10^{-5}$ [Nm/(rad/s)].

The inventors used the waveform of the voltage VB corresponding to the driving current of 0.30 [A] as a reference waveform (referred to as a reference waveform 1) of the voltage VB, and, in the same manner as in Experiment 2, obtained a degree of difference (referred to as a difference-degree score sv1) between the waveforms of the voltage VB and the reference waveform 1. The inventors used the waveform of the voltage VB corresponding to the driving current of 0.06 [A] as a reference waveform (referred to as a reference waveform 2) of the voltage VB, and, in the same manner as in Experiment 2, obtained a degree of difference (referred to as a difference-degree score sv2) between the waveforms of the voltage VB and the reference waveform 2.

Then, the inventors obtained graphs illustrating the relationship between the magnitude of the rotational load of the rotor and the difference-degree scores sv1 and sv2. Figs. 28 and 29 illustrate the graphs. In Figs. 28 and 29, a dashed line in the graphs indicates the difference-degree score sv1 and a one-dot chain line in the graphs indicates the difference-degree score sv2. In Figs. 28 and 29, the rotational load increases toward the left along the horizontal axis, and decreases toward the right along the horizontal axis. As the rotational load increases, the driving current becomes relatively smaller with respect to the rotational load. As the rotational load decreases, the driving current becomes relatively larger with respect to the rotational load.

According to Fig. 28, as the rotational load of the rotor 41 increases (i.e., the driving current becomes relatively small with respect to the rotational load), the difference-degree score sv1 gradually increases, and the difference-degree score sv2 gradually decreases.

According to Fig. 29, as the rotational load of the rotor 41 decreases (i.e., the driving current becomes relatively large with respect to the rotational load), the difference-degree score sv1 gradually increases, and the difference-degree score sv2 gradually increases.

Although the data point corresponding to the rotational load of $10 \times 10^{-5}$ [Nm/(rad/s)] is not illustrated in Figs. 28 and 29, the difference-degree score sv1 is 0 at this rotational load.

The results of this experiment also indicate, similarly to Experiment 2, that the waveform of the voltage VB (and the waveform of the voltage VA) changes when the relationship between the rotational load of the rotor 41 and the magnitude of the driving current supplied to the stator 60 changes. When determination thresholds H11 and H21 are set in Figs. 28 and 29, the range of the rotational load can be divided into Sections A to C, similarly to Fig. 26. Therefore, even when the magnitude of the driving current is varied relative to the rotational load, a determination method similar to that in Experiment 2 remains effective.

The determination unit 83 employs any one of the determination methods described above and determines the relationship between the rotational load of the rotor 41 and the magnitude of the driving current supplied to the stator 60, based on the degree of the difference (the difference-degree score sv) between the waveform of the voltage V obtained by the obtaining unit 82 and the reference waveform of the voltage V.

A first reference waveform of the voltage V and a second reference waveform of the voltage V are set for a single pulse P[k] (where k = 1, 3, 5, or 7). The first reference waveform of the voltage V is used for determination when the rotor 41 rotates in the first direction. The second reference waveform of the voltage V is used for determination when the rotor 41 rotates in the second direction.

The first reference waveform of the voltage VA for pulse P[ka] (where ka = 3 or 7) is set based on the waveform of the voltage VA obtained when the driving current is supplied only to the B-phase stator 62 in response to pulse P[ka], which is input to the stepping motor 66 when the rotor 41 is rotated in the first direction.

The second reference waveform of the voltage VA for pulse P[ka] is set based on the waveform of the voltage VA obtained when the driving current is supplied only to the B-phase stator 62 in response to pulse P[ka], which is input to the stepping motor 66 when the rotor 41 is rotated in the second direction.

The first reference waveform of the voltage VB for pulse P[kb] (where kb = 1 or 5) is set based on the waveform of the voltage VB obtained when the driving current is supplied only to the A-phase stator 61 in response to pulse P[kb], which is input to the stepping motor 66 when the rotor 41 is rotated in the first direction.

The second reference waveform of the voltage VB for pulse P[kb] is set based on the waveform of the voltage VB obtained when the driving current is supplied only to the A-phase stator 61 in response to pulse P[kb], which is input to the stepping motor 66 when the rotor 41 is rotated in the second direction.

The reference waveform of the voltage V is stored in advance in the non-volatile memory 75 as a data table.

A first reference-waveform table C1[k] and a second reference-waveform table C2[k] are stored in the non-volatile memory 75. The first reference-waveform table C1[k] is the first reference waveform of the voltage V set for pulse P[k]. The second reference-waveform table C2[k] is the second reference waveform of the voltage V set for pulse P[k].

The first reference-waveform table C1[k] and the second reference-waveform table C2[k] have the same form as the data table in Fig. 20. In these tables, time points t, defined at predetermined intervals from the starting point (time point 0) of the pulse P, are each associated with a voltage v (referred to as a reference voltage rv) at the corresponding time point t. The intervals between the time points t are equal to the sampling interval (200 microseconds). A single data table includes 40 pairs of the time point t and the reference voltage rv.

The determining unit 83 calculates a value (referred to as the difference-degree score sv) indicating the degree of the difference between the waveform of the voltage V obtained by the obtaining unit 82 and the reference waveform of the voltage V.

When a voltage v (i.e., the voltage V) is obtained by the obtaining unit 82 at an obtaining time tv in response to pulse P[k] being input, the determining unit 83 reads the reference voltage rv associated with the time point t corresponding to the obtaining time tv from the data table (i.e., the first reference-waveform table C1[k] or the second reference-waveform table C2[k]) of the reference waveform of the voltage V set for pulse P[k]. The determining unit 83 calculates a value (referred to as a difference value dv) by subtracting the reference voltage rv from the voltage v. The determining unit 83 calculates a squared value (referred to as an intermediate value dv2) of the difference value dv. The determining unit 83 calculates a difference-degree score sv[k] by summing the intermediate values dv2 calculated in response to pulse P[k] being input.

The determining unit 83 calculates the difference-degree score sv[k] using the voltage v obtained by the obtaining unit 82 during a part of the time period from the starting point to the ending point of pulse P[k]. Specifically, when a time period from the starting point of pulse P[k] to a time point t1 is defined as a first part p1 and a time period from the time point t1 to a time point t2 is defined as a second part p2, the determining unit 83 calculates the difference-degree score sv[k] using the voltage v obtained during the second part p2. The time point t1 is after the starting point of pulse P[k]. The time point t2 is after the time point t1 and before the ending point of pulse P[k]. The time point t2 may coincide with the ending point of pulse P[k]. Fig. 30 illustrates an example of the waveform (in a solid line: "obtained waveform") of the voltage VB obtained in response to pulse P[1] being input and the reference waveform (in a dashed line) of the voltage VB. In Fig. 30, the length of each vertical line connecting the waveform of the voltage VB and the reference waveform of the voltage VB in the second part p2 represents the difference value dv used for calculating the difference-degree score sv[1]. The determining unit 83 does not use the voltage v in the first part p1 for calculating the difference-degree score sv[k].

The voltage v may include a voltage component (referred to as a first voltage component) due to back electromotive force generated by the inductance of the coil of the stator 60 and a voltage component (referred to as a second voltage component) due to electromagnetic induction generated by the rotation of the rotor 41. At a time point shortly after the starting point of pulse P[k], the magnitude of the first voltage component is greater than the magnitude of the second voltage component, and the magnitude of the first voltage component decreases as time passes. Therefore, the determining unit 83 calculates the difference-degree score sv[k] using the voltage v obtained by the obtaining unit 82 after a certain time has elapsed since the starting point of pulse P[k]. Specifically, the determining unit 83 calculates the difference-degree score sv[k] using the voltage v obtained by the obtaining unit 82 after the magnitude of the first voltage component becomes less than the magnitude of the second voltage component. With this configuration, the proportion of the second voltage component becomes relatively high in the voltage v. Therefore, the determining unit 83 can determine the relationship between the rotational load of the rotor 41 and the magnitude of the driving current supplied to the stator 60 with higher accuracy.

The duration of the first part p1 is set within a range from 5% to 50%, preferably from 20% to 30%, of the time period from the starting point to the ending point of pulse P[k]. The duration of the second part p2 is set within a range from 50% to 95%, preferably from 70% to 80%, of the time period from the starting point to the ending point of pulse P[k]. In the voltage v obtained by the obtaining unit 82 during the second part p2, the voltage component due to back electromotive force generated by the inductance of the coil of the stator 60 is less than the voltage component due to electromagnetic induction generated by the rotation of the rotor 41. The determining unit 83 may calculate the difference-degree score sv[k] using the voltage v obtained by the obtaining unit 82 during the time period (the entire time period) from the starting point to the ending point of pulse P[k]. In this configuration, the time point t1 coincides with the starting point of pulse P[k], and the time point t2 coincides with the ending point of pulse P[k].

The difference-degree score sv is given by Expression (1) below, where v[tv] represents the voltage v obtained at an obtaining time tv during the time period from the time point t1 to the time point t2, and rv[tv] represents the reference voltage rv associated with the time point t corresponding to the obtaining time tv in the data table of the reference waveform.

$$sv = \sum_{tv=t1}^{t2} (v[tv] - rv[tv])^2 \quad \cdots \quad (1)$$

The determining unit 83 determines the relationship between the rotational load of the rotor 41 and the magnitude of the driving current supplied to the stator 60 based on the difference-degree score sv[k]. Specifically, the determining unit 83 compares the difference-degree score sv[k] with a predetermined determination threshold H. For example, the determination threshold H is selected from among the determination thresholds H11, H21, H22, H31, and H32 described above. The determining unit 83 determines the relationship based on the result of comparing the difference-degree score sv[k] with the determination threshold H. The motor-operated valve control device 70 may have a determination threshold H[k] corresponding to the difference-degree score sv[k] for each value of "k". The determination threshold H[k] may have the same value for any "k" or may have a different value depending on "k". The determining unit 83 may calculate the difference-degree score sv for only one of pulses P[1], P[3], P[5], and P[7] and determine the relationship described above.

An example of an operation of the motor-operated valve control device 70 is described below with reference to Fig. 31.

In this operation, the motor-operated valve control device 70 determines the relationship between the rotational load of the rotor 41 and the magnitude of the driving current supplied to the stator 60, using any one of Determination Methods 2 to 4 described above. The non-volatile memory 75 stores the reference waveforms (i.e., the first reference-waveform tables C1 and the second reference-waveform tables C2) of the voltage V and the determination threshold H, in accordance with the determination method used by the motor-operated valve control device 70. The reference waveforms of the voltage V are set based on the waveforms of the voltage V previously obtained in the motor-operated valve 5.

The motor-operated valve control device 70, specifically the computer 80, receives a command for changing the valve opening degree (i.e., the opening degree of the valve port 17) from the air conditioner control device 110 (S110). The motor-operated valve control device 70 obtains the number (referred to as a target number Nt) of the pulses P to be input to the stepping motor 66 in order to change the present valve opening degree to a target valve opening degree included in the command, and obtains the rotational direction (the first direction or the second direction) of the rotor 41.

The motor-operated valve control device 70 starts inputting the pulses P to the stepping motor 66 to rotate the rotor 41 in the calculated rotational direction (S120). Specifically, the motor-operated valve control device 70 inputs, to the motor driver 77, the current control signal to set initial values for target values (i.e., the A-phase current target value Ita and the B-phase current target value Itb) of the driving currents corresponding to pulses P[1] to P[8], and the direction signal to indicate the rotational direction. Then, the motor-operated valve control device 70 starts inputting the step signal to the motor driver 77. The initial values are set in accordance with the maximum rotational load assumed for the rotor 41.

The motor-operated valve control device 70 obtains the voltage V (S130). Specifically, the motor-operated valve control device 70 sequentially obtains the voltage VA when the driving current is supplied only to the B-phase stator 62 in response to pulse P[ka]. The motor-operated valve control device 70 sequentially obtains the voltage VB when the driving current is supplied only to the A-phase stator 61 in response to pulse P[kb]. In other words, the motor-operated valve control device 70 obtains the waveform of the voltage VA and the waveform of the voltage VB. The motor-operated valve control device 70 may store the waveform of the voltage VA and the waveform of the voltage VB in the RAM.

The motor-operated valve control device 70 determines the relationship between the rotational load of the rotor 41 and the magnitude of the driving current supplied to the stator 60 (S140). Specifically, at the ending point of pulse P[k], the motor-operated valve control device 70 calculates the difference-degree score sv using the waveform of the voltage V and the reference waveform of the voltage V, and determines the relationship based on the difference-degree score sv and the determination threshold H.

A case in which the motor-operated valve control device 70 uses Determination Method 4 is described. The motor-operated valve control device 70 calculates the difference-degree score sv1 using the waveform of the voltage V and the reference waveform 1, and calculates the difference-degree score sv2 using the waveform of the voltage V and the reference waveform 2. When the difference-degree score sv1 is less than or equal to the determination threshold H11, the motor-operated valve control device 70 determines that the magnitude of the driving current is appropriate for the rotational load of the rotor 41. When the difference-degree score sv1 is greater than the determination threshold H11 and the difference-degree score sv2 is greater than the determination threshold H21, the motor-operated valve control device 70 determines that the magnitude of the driving current is excessive relative to the rotational load of the rotor 41. When the difference-degree score sv1 is greater than the determination threshold H11 and the difference-degree score sv2 is less than or equal to the determination threshold H21, the motor-operated valve control device 70 determines that the magnitude of the driving current is insufficient relative to the rotational load of the rotor 41.

When the magnitude of the driving current is determined to be appropriate for the rotational load of the rotor 41 (Y in S150), the motor-operated valve control device 70 does not change the target value of the driving current. In other words, the motor-operated valve control device 70 maintains the magnitude of the driving current.

When the magnitude of the driving current is determined to be excessive relative to the rotational load of the rotor 41 (N in S150 and Y in S160), the motor-operated valve control device 70 decreases the magnitude of the driving current (S170). Specifically, the motor-operated valve control device 70 inputs the current control signal to the motor driver 77 to set, for each of the target values of the driving current corresponding to pulses P[1] to P[8], a new value that is less than the present value by a predetermined amount (e.g., 1 [mA]). The motor-operated valve control device 70 ensures that the target value of the driving current does not become less than a lower limit value defined for the stepping motor 66.

When the magnitude of the driving current is determined to be insufficient relative to the rotational load of the rotor 41 (N in S150 and N in S160), the motor-operated valve control device 70 increases the magnitude of the driving current (S180). Specifically, the motor-operated valve control device 70 inputs the current control signal to the motor driver 77 to set, for each of the target values of the driving current corresponding to pulses P[1] to P[8], a new value that is greater than the present value by a predetermined amount (e.g., 1 [mA]). The motor-operated valve control device 70 ensures that the target value of the driving current does not become greater than an upper limit value defined for the stepping motor 66.

The predetermined amount may be a previously defined fixed value or a value based on the difference between the difference-degree score sv and the determination threshold H. Alternatively, a predetermined percentage (e.g., 3%) can be used instead of the predetermined amount. The motor-operated valve control device 70 may set the target value of the driving current using PID control.

The motor-operated valve control device 70 may be configured to decrease the magnitude of the driving current when the magnitude of the driving current is determined, multiple times in succession, to be excessive relative to the rotational load of the rotor 41. The motor-operated valve control device 70 may be configured to increase the magnitude of the driving current when the magnitude of the driving current is determined, multiple times in succession, to be insufficient relative to the rotational load of the rotor 41.

The motor-operated valve control device 70 repeats operations in Step S130 to S190 until the number of the pulses P (i.e., the number of pulses in the step signal) input to the stepping motor 66 reaches the target number Nt (N in S190). When the number of the pulses P input to the stepping motor 66 reaches the target number Nt (Y in S190), the motor-operated valve control device 70 stops inputting the pulses P to the stepping motor 66 (S200) and completes this operation.

As described above, the motor-operated valve device 1 includes the motor-operated valve 5 and the motor-operated valve control device 70. The motor-operated valve 5 includes the valve body 10 that has the valve port 17, the stepping motor 66 that includes the rotor 41 and the stator 60, and the valve member 30 that moves relative to the valve port 17 when the rotor 41 rotates.

The motor-operated valve control device 70 (the rotation control unit 81) is configured to supply the driving current for rotating the rotor 41 to the stator 60. The motor-operated valve control device 70 (the obtaining unit 82) is configured to obtain the voltage V generated in the stator 60 by the rotation of the rotor 41. The motor-operated valve control device 70 (the determining unit 83) is configured to determine the relationship between the rotational load of the rotor 41 and the magnitude of the driving current, based on the voltage V obtained.

The motor-operated valve control device 70 is configured to maintain the magnitude of the driving current when determining that the magnitude of the driving current is appropriate for the rotational load of the rotor 41. The motor-operated valve control device 70 is configured to decrease the magnitude of the driving current when determining that the magnitude of the driving current is excessive relative to the rotational load of the rotor 41. The motor-operated valve control device 70 is configured to increase the magnitude of the driving current when determining that the magnitude of the driving current is insufficient relative to the rotational load of the rotor.

With this configuration, the motor-operated valve control device 70 can supply to the stator 60 the driving current of a magnitude that is appropriate for the rotational load of the rotor 41, enabling the power consumption of the motor-operated valve 5 to be reduced.

The motor-operated valve control device 70 is configured to determine the relationship between the rotational load of the rotor 41 and the magnitude of the driving current, based on the voltage V generated in the stator 60 by the rotation of the rotor 41. Consequently, in the motor-operated valve control device 70, a component for detecting the rotational load of the rotor 41 is not required, enabling the configuration of the motor-operated valve control device 70 or the motor-operated valve 5 to be simplified.

The motor-operated valve control device 70 is configured to determine the relationship between the rotational load of the rotor 41 and the magnitude of the driving current, based on the degree of the difference between the waveform of the voltage V and the reference waveform of the voltage V. As a result, the motor-operated valve control device 70 can determine the relationship with higher accuracy, compared to a configuration that determines the relationship based on the area or the maximum amplitude of the waveform.

The motor-operated valve control device 70 is configured to calculate the difference-degree score sv indicating the degree of the difference between the waveform of the voltage V and the reference waveform of the voltage V, and determine the relationship between the rotational load of the rotor 41 and the magnitude of the driving current, based on the result of comparing the difference-degree score sv with the determination threshold H. As a result, the motor-operated valve control device 70 can determine the relationship with higher accuracy.

The reference waveform of the voltage V is represented as a data table including the time point t and the reference voltage rv associated with this time point t. The motor-operated valve control device 70 is configured to sequentially obtain the voltages V (voltages v). The motor-operated valve control device 70 is configured to calculate the intermediate value dv2 that is a squared value of the difference value dv between the voltage v obtained at the obtaining time tv and the reference voltage rv associated with the time point t corresponding to the obtaining time tv in the data table. The motor-operated valve control device 70 is configured to calculate the difference-degree score sv by summing the intermediate values dv2 calculated using the voltages v. With this configuration, the difference-degree score sv more appropriately reflects the degree of difference in the shapes of the waveforms than the area and the maximum amplitude of the waveform. Therefore, the motor-operated valve control device 70 can determine the relationship between the rotational load of the rotor 41 and the magnitude of the driving current with higher accuracy.

Voltage and current have a close relationship. Consequently, the motor-operated valve control device 70 may determine the relationship between the rotational load of the rotor 41 and the magnitude of the driving current supplied to the stator 60 using, instead of the voltage generated in the stator 60 by the rotation of the rotor 41, the current generated in the stator 60 by the rotation of the rotor 41. The configuration using the waveform of the current has the same functions and effects as those of the configuration using the waveform of the voltage.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

Reference Signs List

1 ... motor-operated valve device, 5 ... motor-operated valve, 10 ... valve body, 11 ... body member, 11a ... fitting hole, 11b ... through hole, 11d ... planar part, 13 ... connection member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... plug portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole tooth, 61b ... pole tooth, 61c ... A-phase coil, 62 ... B-phase stator, 62a ... pole tooth, 62b ... pole tooth, 62c ... B-phase coil, 66 ... stepping motor, 70 ... motor-operated valve control device, 71 ... circuit board, 75 ... non-volatile memory, 76 ... communication device, 77 ... motor driver, 77A ... H-bridge circuit, 77B ... H-bridge circuit, 77C ... current control unit, 80 ... computer, 81 ... rotation control unit, 82 ... obtaining unit, 83 ... determining unit, 100 ... air conditioner, 101 ... compressor, 102 ... condenser, 103 ... evaporator, 105 ... pipe, 110 ... air conditioner control device, 120 ... wired communication bus, A1 ... terminal, A2 ... terminal, B1 ... terminal, B2 ... terminal, L ... axis.

**Claims**

1. A motor-operated valve control device for controlling a motor-operated valve including a valve body that has a valve port, a stepping motor that includes a rotor and a stator, and a valve member that moves relative to the valve port when the rotor rotates,
   the motor-operated valve control device comprising:

   a rotation control unit configured to supply a driving current for rotating the rotor to the stator;
   an obtaining unit configured to obtain a voltage generated in the stator by rotation of the rotor; and
   a determining unit configured to determine a relationship between rotational load of the rotor and magnitude of the driving current, based on the voltage obtained by the obtaining unit,
   wherein the rotation control unit is configured to:

   decrease the magnitude of the driving current when the determining unit determines that the magnitude of the driving current is excessive relative to the rotational load of the rotor, and
   increase the magnitude of the driving current when the determining unit determines that the magnitude of the driving current is insufficient relative to the rotational load of the rotor.

2. The motor-operated valve control device according to Claim 1, wherein the determining unit is configured to determine the relationship based on a degree of difference between a waveform of the voltage obtained by the obtaining unit and a reference waveform of the voltage.

3. The motor-operated valve control device according to Claim 2, wherein the determining unit is configured to calculate a difference-degree score indicating the degree of the difference between the waveform of the voltage and the reference waveform of the voltage, and determine the relationship based on a result of comparing the difference-degree score with a determination threshold.

4. The motor-operated valve control device according to Claim 3,

   wherein the reference waveform of the voltage is represented as a data table including a time point and a reference voltage associated with the time point,

wherein the obtaining unit is configured to sequentially obtain voltages each of which is the voltage, and wherein the determining unit is configured to:

calculate an intermediate value that is a squared value of a difference value between the voltage obtained by the obtaining unit at an obtaining time and the reference voltage associated with the time point corresponding to the obtaining time in the data table, and

calculate the difference-degree score by summing intermediate values each of which is the intermediate value calculated using the voltage.

5. A motor-operated valve control device for controlling a motor-operated valve including a valve body that has a valve port, a stepping motor that includes a rotor and a stator, and a valve member that moves relative to the valve port when the rotor rotates,

the motor-operated valve control device comprising:

a rotation control unit configured to supply a driving current for rotating the rotor to the stator;

an obtaining unit configured to obtain a current generated in the stator by rotation of the rotor; and

a determining unit configured to determine a relationship between rotational load of the rotor and magnitude of the driving current, based on the current obtained by the obtaining unit,

wherein the rotation control unit is configured to:

decrease the magnitude of the driving current when the determining unit determines that the magnitude of the driving current is excessive relative to the rotational load of the rotor, and

increase the magnitude of the driving current when the determining unit determines that the magnitude of the driving current is insufficient relative to the rotational load of the rotor.

6. The motor-operated valve control device according to Claim 1 or 5, wherein the rotation control unit is configured to maintain the magnitude of the driving current when the determining unit determines that the magnitude of the driving current is appropriate for the rotational load of the rotor.

7. A motor-operated valve device comprising: the motor-operated valve control device according to Claim 1 or 5; and the motor-operated valve.

8. A method for controlling a motor-operated valve including a valve body that has a valve port, a stepping motor that includes a rotor and a stator, and a valve member that moves relative to the valve port when the rotor rotates, the method comprising:

supplying a driving current for rotating the rotor to the stator;

obtaining a voltage generated in the stator by rotation of the rotor;

determining a relationship between rotational load of the rotor and magnitude of the driving current, based on the voltage;

decreasing the magnitude of the driving current when the magnitude of the driving current is determined to be excessive relative to the rotational load of the rotor; and

increasing the magnitude of the driving current when the magnitude of the driving current is determined to be insufficient relative to the rotational load of the rotor.

9. A method for controlling a motor-operated valve including a valve body that has a valve port, a stepping motor that includes a rotor and a stator, and a valve member that moves relative to the valve port when the rotor rotates, the method comprising:

supplying a driving current for rotating the rotor to the stator;

obtaining a current generated in the stator by rotation of the rotor;

determining a relationship between rotational load of the rotor and magnitude of the driving current, based on the current;

decreasing the magnitude of the driving current when the magnitude of the driving current is determined to be excessive relative to the rotational load of the rotor; and

increasing the magnitude of the driving current when the magnitude of the driving current is determined to be insufficient relative to the rotational load of the rotor.

**10.** The method for controlling the motor-operated valve according to Claim 8 or 9, wherein the method includes maintaining the magnitude of the driving current when the magnitude of the driving current is determined to be appropriate for the rotational load of the rotor.

# FIG.1

# FIG.2

# FIG.3

（A）

（B）

# FIG.4

# FIG.5

（A）

（B）

# FIG.6

# FIG.7

FIG.8

| | P[1] | P[2] | P[3] | P[4] | P[5] | P[6] | P[7] | P[8] | NOTE |
|---|---|---|---|---|---|---|---|---|---|
| A-PHASE CURRENT TARGET VALUE | +I2 | +I1 | 0 | −I1 | −I2 | −I1 | 0 | +I1 | +：A1→A2<br>O：OFF<br>−：A2→A1 |
| B-PHASE CURRENT TARGET VALUE | 0 | +I1 | +I2 | +I1 | 0 | −I1 | −I2 | −I1 | +：B1→B2<br>O：OFF<br>−：B2→B1 |

# FIG.9

# FIG.10

# FIG.11

| | P[2] | | | | | | | | 61 |
|---|---|---|---|---|---|---|---|---|---|
| A-PHASE STATOR | | S | N | S | N | S | N | S | |
| | | | | | | | | | 41 |
| ROTOR | | N | S | N | S | N | S | N | |
| | | | | | | | | | 62 |
| B-PHASE STATOR | | S | N | S | N | S | N | S | |

# FIG.12

# FIG.13

# FIG.14

# FIG.15

# FIG.16

# FIG.17

FIG.18

# FIG.19

# FIG.20

| # | TIME POINT t | VOLTAGE v |
|---|---|---|
| 0 | 0 | 0.0 |
| 1 | 200 | 338.5 |
| 2 | 400 | 468.5 |
| 3 | 600 | 440.3 |
| 4 | 800 | 133.8 |
| 5 | 1000 | 65.8 |
| 6 | 1200 | 41.2 |
| 7 | 1400 | 30.4 |
| 8 | 1600 | 24.9 |
| 9 | 1800 | 23.7 |
| : | : | : |
| 34 | 6800 | 20.0 |
| 35 | 7000 | 15.8 |
| 36 | 7200 | 11.5 |
| 37 | 7400 | 7.8 |
| 38 | 7600 | 0.0 |
| 39 | 7800 | 0.0 |

FIG.21

FIG.22

# FIG.23

# FIG.24

## FIG.25

# FIG.26

FIG.27

# FIG.28

# FIG.29

# FIG.30

FIG.31

```
                    ┌─────────────┐
                    │   START     │
                    └──────┬──────┘
                           │
                    ┌──────▼──────────────┐
                    │  RECEIVE COMMAND    │─── S110
                    └──────┬──────────────┘
                           │
                    ┌──────▼──────────────────┐
                    │ START INPUTTING PULSES P │─── S120
                    └──────┬──────────────────┘
                           │
              ┌──────────▶ │
              │     ┌──────▼──────────────┐
              │     │  OBTAIN VOLTAGE V   │─── S130
              │     └──────┬──────────────┘
              │            │
              │     ┌──────▼────────────────────────┐
              │     │ DETERMINE RELATIONSHIP BETWEEN │─── S140
              │     │ ROTATIONAL LOAD OF ROTOR AND   │
              │     │ MAGNITUDE OF DRIVING CURRENT   │
              │     └──────┬─────────────────────────┘
              │            │               S150
              │        ┌───▼───────────────┐
              │     Y  ╱  IS DRIVING CURRENT ╲
              ├───────   APPROPRIATE?         
              │        ╲                     ╱
              │         └───────┬───────────┘
              │              N  │      S160
              │        ┌────────▼──────────┐
              │     Y ╱  IS DRIVING CURRENT ╲  N
              │   ┌────  EXCESSIVE?         ─────────┐
              │   │    ╲                    ╱        │
              │   │     └─────────┬────────┘         │
              │   │               │ Y                │
              │ S170│     S170    │       S180       │
              │ ┌───▼──────────────────┐  ┌──────────▼───────────┐
              │ │ DECREASE DRIVING     │  │ INCREASE DRIVING     │
              │ │ CURRENT              │  │ CURRENT              │
              │ └──────┬───────────────┘  └──────────┬───────────┘
              │        │                             │
              │        └──────────┬──────────────────┘
              │               S190│
              │        ┌──────────▼────────┐
              │   N   ╱  IS INPUT OF PULSES P ╲
              └────────  COMPLETED?            
                       ╲                      ╱
                        └──────────┬─────────┘
                                   │ Y     S200
                        ┌──────────▼──────────┐
                        │ STOP INPUTTING PULSES P │
                        └──────────┬──────────┘
                                   │
                            ┌──────▼──────┐
                            │    END      │
                            └─────────────┘
```

## INTERNATIONAL SEARCH REPORT

| International application No. |
| --- |
| **PCT/JP2023/045453** |

| **A.** | **CLASSIFICATION OF SUBJECT MATTER** |
| --- | --- |

*F16K 31/04*(2006.01)i; *H02P 8/14*(2006.01)i
FI:  F16K31/04 A; H02P8/14

According to International Patent Classification (IPC) or to both national classification and IPC

| **B.** | **FIELDS SEARCHED** |
| --- | --- |

Minimum documentation searched (classification system followed by classification symbols)

F16K31/04; H02P8/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| Y | JP 53-60268 A (SUWA SEIKOSHA K.K.) 30 May 1978 (1978-05-30) p. 2, column 3, line 7 to p. 3, column 8, line 17, fig. 1, 4 | 1-2, 5-10 |
| A | | 3-4 |
| Y | JP 9-292047 A (CKD CORPORATION) 11 November 1997 (1997-11-11) paragraphs [0018], [0022], [0023], fig. 1-4 | 1-2, 5-10 |
| A | | 3-4 |
| A | JP 2022-60852 A (CANON KABUSHIKI KAISHA) 15 April 2022 (2022-04-15) entire text, all drawings | 1-10 |
| A | JP 2010-226842 A (FUJITSU GENERAL LIMITED) 07 October 2010 (2010-10-07) entire text, all drawings | 1-10 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 February 2024** | **05 March 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/045453**

| Patent document cited in search report | | | Publication date (day/month/year) | Patent family member(s) | Publication date (day/month/year) |
|---|---|---|---|---|---|
| JP | 53-60268 | A | 30 May 1978 | (Family: none) | |
| JP | 9-292047 | A | 11 November 1997 | (Family: none) | |
| JP | 2022-60852 | A | 15 April 2022 | (Family: none) | |
| JP | 2010-226842 | A | 07 October 2010 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019130928 A